# FASCICULE DE BREVET EUROPEEN

(11) **EP 2 735 430 B1**
(45) Date de publication et mention de la délivrance du brevet: **16.11.2016**
(21) Numéro de dépôt: 14156290.0
(22) Date de dépôt: 06.09.2010
(51) Int. Cl.: B29C 49/48, B29C 49/06

(54) **PROCEDE DE CHANGEMENT D'UN MOULE, DISPOSITIF ET SYSTÈME**
VERFAHREN ZUM WECHSELN EINER FORM, VORRICHTUNG UND SYSTEM
METHOD FOR CHANGING A MOULD, APPARATUS AND SYSTEM

(30) Priorité: 07.09.2009 FR 0956082; 07.09.2009 FR 0956084
(43) Date de publication de la demande: 28.05.2014
(62) Demande divisionnaire de: 10748110.3
(73) Titulaire: SIDEL PARTICIPATIONS, 76930 Octeville sur Mer (FR)
(72) Inventeur: Pasquier, Hervé, 76930 Octeville sur Mer (FR); Cirette, Damien, 76930 Octeville sur Mer (FR); Chomel, Nicolas, 76930 Octeville sur Mer (FR); Duclos, Yves-Alban, 76930 Octeville sur Mer (FR)
(74) Mandataire: Grassin d'Alphonse, Emmanuel Jean Marie

(56) Documents cités:
- EP-A1- 0 544 902
- EP-A2- 0 513 951
- EP-A2- 0 893 221
- AT-U1- 9 438
- DE-C1- 3 613 543
- FR-A1- 2 863 930
- DATABASE WPI Week 200913 Thomson Scientific, London, GB; AN 2009-B43619 XP002604446, -& CN 201 165 049 Y (GUANGZHOU DAYILONG PACKING MACHINE CO LT) 17 décembre 2008 (2008-12-17)
- DATABASE WPI Week 199837 Thomson Scientific, London, GB; AN 1998-432399 XP002582794, -& JP 10 180813 A (SEKISUI CHEM IND CO LTD) 7 juillet 1998 (1998-07-07)
- DATABASE WPI Week 200568 Thomson Scientific, London, GB; AN 2005-661011 XP002604447, -& JP 2005 246634 A (TOMITA KK) 15 septembre 2005 (2005-09-15)
- DATABASE WPI Week 199720 Thomson Scientific, London, GB; AN 1997-221028 XP002604448, -& JP 9 066531 A (MATSUSHITA DENKI SANGYO KK) 11 mars 1997 (1997-03-11)
- DATABASE WPI Week 199443 Thomson Scientific, London, GB; AN 1994-344040 XP002721916, -& JP H06 238712 A (AMANO CORP) 30 août 1994 (1994-08-30)

## Description

La présente invention concerne un procédé de changement d'un moule pour la fabrication de récipients, des dispositifs de fixation et un système pour la mise en oeuvre d'un tel procédé. Tels procédés et dispositifs sont divulgués dans FR2863930, CN201165049, EP0893221, JP10180813, DE3613543, AT9438 et EP0513951.

La présente invention concerne plus particulièrement un procédé de changement d'un moule d'un dispositif de moulage pour la fabrication de récipients en matière thermoplastique par formage d'une préforme préalablement chauffée, notamment des bouteilles, ledit dispositif de moulage comportant deux porte-moules montés mobiles l'un par rapport à l'autre autour d'un axe de rotation entre une position ouverte et une position fermée et deux demi-moules fixés chacun de manière démontable à un porte-moule associé par des moyens de fixation.

On connaît de l'état de la technique de tels dispositifs de moulage destinés à équiper des machines de fabrication de récipients, notamment mais non exclusivement, des machines dites "rotatives" comportant un carrousel circonférentiellement pourvu d'un nombre donné de postes de soufflage identiques.

La fabrication de récipients en matière plastique, tels que des bouteilles, flacons, etc., y est effectuée à partir de préformes ou d'ébauches préalablement chauffées dans un four de conditionnement thermique.

En phase de fabrication, selon le nombre d'empreinte des moules, une ou plusieurs préformes sont ainsi amenée(s) à un poste de la machine pour être introduite(s) dans un dispositif de moulage auquel sont associés des moyens de formage par application d'au moins un fluide sous pression, gazeux et/ou liquide

Le formage (ou mise en forme) de la préforme est par exemple obtenu par soufflage ou par étirage-soufflage au moyen d'un gaz sous pression, tel que de l'air, voir au moins en partie au moyen d'un liquide sous pression.

Dans une machine de fabrication "rotatives", chaque dispositif de moulage, dit en "portefeuille", comporte au moins un moule constitué de deux demi-moules supportés respectivement par deux porte-moules qui sont montés mobiles l'un par rapport à l'autre autour d'un axe de rotation, généralement d'orientation verticale.

Chaque demi-moule est reçu dans un logement complémentaire du porte-moule associé auquel le demi-moule est fixé de manière amovible par l'intermédiaire de moyens de fixation afin de permettre un démontage en vue d'un changement du moule.

Un changement du moule est en particulier requis pour procéder à des fabrications de récipients de formes et/ou de dimensions différentes ou encore à leur remplacement en cas d'endommagement et/ou d'usure des demi-moules.

Pour réduire tant les coûts de fabrication que le temps nécessaire à un tel changement du moule, on a déjà proposé dans le document EP-B1-0.821.641 différents perfectionnements à de tels dispositifs de moulage en "portefeuille".

Tout d'abord, des moyens de régulation de la température des empreintes de chaque demi-moule sont réalisés en une pièce distincte du demi-moule de sorte que chaque demi-moule comprend (selon les désignations de ce document) d'une part un porte-coquille pourvu des moyens de régulation de température qui est destiné à être supporté par le porte-moule et, d'autre part, une coquille munie d'une demi-empreinte du récipient à obtenir qui est apte à être solidarisée de manière amovible au porte-coquille par l'intermédiaire de moyens de fixation d'un dispositif de fixation.

Ensuite, les moyens de fixation de la coquille sur le porte-coquille sont disposés sur les bords respectifs de la coquille et de la demi-coquille qui sont parallèles à l'axe principal de l'empreinte.

Ces moyens de fixation comportent en particulier des moyens de vissage d'une barre de serrage sur une face de joint du porte-coquille. La barre de serrage comporte des pattes de serrage débordant sur la face de joint du demi-moule pour assurer la fixation de la coquille solidairement au porte-coquille.

Avec de tels moyens de fixation, les étapes de montage et de démontage d'un changement de moule pour un dispositif de moulage équipant un poste d'une machine de fabrication de type rotative, encore appelée « souffleuse », sont mises en oeuvre par au moins un opérateur et la mise en place de la coquille est obtenue suivant un mouvement circulaire.

Plus précisément, la coquille est introduite dans le logement correspondant du porte-coquille, le bord du moule situé du côté des moyens d'articulation entre les porte-moules est tout d'abord amené en position puis poursuivant le mouvement circulaire l'on amène l'autre bord en position pour procéder à la fixation par l'intermédiaire des moyens de fixation qui sont alors commandés.

Ainsi, les opérations de montage et de démontage requièrent l'utilisation d'outils, tels que des tournevis, pour agir sur les moyens de fixation et cela alors que l'opérateur se tient face aux porte-moules en position ouverte.

On procède ainsi successivement au démontage d'une coquille puis à celui de l'autre coquille, de même que le montage des nouvelles coquilles sont effectués l'une après l'autre.

On comprendra aisément qu'une telle opération de montage et/ou démontage est délicate et que les dispositifs de moulage de type en "portefeuille" présentent des spécificités propres en particulier de difficultés d'accès pour l'opérateur devant utiliser ces outils et manoeuvrer avec précision chaque coquille (ou demi-moule).

De plus, malgré les perfectionnements apportés aux moyens de fixation, on cherche à réduire encore le temps total nécessaire au changement de moule comportant le démontage et le montage des demi-moules.

En effet, l'immobilisation de la machine durant ces opérations présente un coût important du fait de l'arrêt complet de la fabrication qui l'accompagne, les opérations de changement de moule étant plus ou moins fréquentes selon les utilisateurs.

C'est l'une des raisons pour lesquelles, on recherche à réduire encore et toujours les temps nécessaires pour procéder à ces étapes de montage/démontage des demi-moules lors d'un changement de moule.

Dans ce but, l'invention propose un procédé de changement d'un moule d'un dispositif de moulage pour la fabrication de récipients du type décrit précédemment.

Selon l'invention, le procédé comporte pour démonter un moule au moins les étapes consistant à :
(a) commander les moyens de fixation pour libérer chaque demi-moule alors que les porte-moules occupent la position fermée,
(b) joindre ensemble les demi-moules par des moyens d'assemblage de manière à former un sous-ensemble unitaire transportable alors que les porte-moules occupent la position fermée,
(c) ouvrir les porte-moules depuis la position fermée jusqu'à la position ouverte pour en extraire, suivant un mouvement de translation, ledit sous-ensemble unitaire et de manière que ledit sous-ensemble unitaire demeure dans une position de référence,
(d) enlever le sous-ensemble unitaire d'entre les porte-moules à partir de sa position de référence au moyen d'un robot comportant au moins un bras muni de moyens de préhension.

Selon d'autres caractéristiques, le procédé comporte, pour la mise en oeuvre de l'étape (a), au moins :
- une sous-étape (a1) consistant à commander le déverrouillage d'au moins un organe d'actionnement des moyens de fixation occupant une position de fixation pour libérer ledit organe d'actionnement ;
- une sous-étape (a2) consistant à commander un dispositif de commande pour déplacer en coulissement un organe d'actionnement des moyens de fixation depuis une position de fixation jusqu'à une position de libération ;
- une sous-étape (a3) consistant à commander le verrouillage d'au moins un organe d'actionnement des moyens de fixation occupant une position de libération pour maintenir ledit organe d'actionnement en position de libération ;
- une sous-étape (a4) mise en oeuvre après libération de chaque demi-moule et consistant à commander des moyens de décollement pour provoquer le décollement de chaque demi-moule par rapport au porte-moule.

Avantageusement, le procédé comporte au moins les étapes suivantes pour monter un autre moule :
(e) mettre en place un sous-ensemble unitaire dans ladite position de référence entre les porte-moules en position ouverte,
(f) refermer des porte-moules sur le sous-ensemble unitaire,
(g) enlever les moyens d'assemblage du sous-ensemble unitaire pour autoriser la séparation les demi-moules,
(h) commander les moyens de fixation pour fixer chaque demi-moule au porte-moule associé.

Avantageusement, le procédé comporte une étape supplémentaire mise en oeuvre avant l'étape (c) et après l'étape (e) consistant à commander des moyens de support aptes à retenir en position de référence ledit sous-ensemble unitaire.

Selon d'autres caractéristiques, le procédé comporte, pour la mise en oeuvre de l'étape (h), au moins :
- une sous-étape (h1) consistant à commander le déverrouillage d'au moins un organe d'actionnement des moyens de fixation occupant la position de libération pour libérer ledit organe d'actionnement, notamment apte alors à être rappelé automatiquement vers la position de fixation ;
- le procédé comporte, pour la mise en oeuvre de l'étape (h), au moins une sous-étape (h2) consistant à commander un dispositif de commande pour déplacer en coulissement un organe d'actionnement des moyens de fixation depuis une position de fixation jusqu'à une position de libération ;
- le procédé comporte, pour la mise en oeuvre de l'étape (h), au moins une sous-étape (h3) consistant à commander le verrouillage d'au moins un organe d'actionnement des moyens de fixation occupant une position de fixation pour maintenir ledit organe d'actionnement en position de fixation.

L'invention concerne encore des dispositifs de fixation pour la mise en oeuvre du procédé, selon la revendication 11.

Grâce au procédé de changement de moule selon l'invention et au dispositif de fixation, le temps requis pour changer un moule est très réduit par rapport à celui nécessaire auparavant avec les dispositifs de fixation de l'état de la technique.

Selon d'autres caractéristiques du dispositif de fixation selon l'invention :
- le dispositif comporte des moyens de fixation comportant au moins un organe d'actionnement des moyens de fixation qui est apte à être commandé en déplacement entre au moins une position de fixation et une position de libération depuis l'extérieur du dispositif de moulage alors que les porte-moules sont en position fermée ;
- l'organe d'actionnement des moyens de fixation est commandé en translation de manière à coulisser entre lesdites positions de fixation et de libération ;
- l'organe d'actionnement des moyens de fixation est commandé en rotation entre lesdites position de fixation et position de libération ;
- les moyens de fixation commandés sélectivement sont aptes à exercer une force d'attraction sur chaque demi-moule pour le fixer au porte-moule associé ;
- les moyens de fixation exerçant ladite force d'attraction sont des moyens à dépression aptes à assurer la fixation des demi-moules par effet ventouse.

Grâce aux différents dispositifs de fixation selon l'invention, il est en effet possible d'agir sur les moyens de fixation depuis l'extérieur du dispositif de moulage de manière à fixer ou libérer sélectivement les demi-moules par rapport au porte-moules et cela quelle que soit la position ouverte ou fermée occupée par les porte-moules.

Par comparaison avec les moyens de fixation selon l'état de la technique pour lesquels les porte-moules doivent nécessairement être en position ouverte pour autoriser l'accès au moyens de fixation, les moyens de fixation selon l'invention sont susceptibles d'être commandés indépendamment de la position ouverte ou fermée desdits porte-moules.

Avantageusement, les moyens de fixation selon l'invention permettent de procéder à la fixation ou à la libération de chaque demi-moule sans manipulation fastidieuse d'outils, la commande des moyens de fixation étant obtenue rapidement et simplement alors que les porte-moules occupent la position fermée.

Selon l'invention, lorsque les deux bords de chaque demi-moule sont équipés de moyens de fixation conformes aux enseignements de l'invention, il est possible de réaliser en une unique opération le montage ou démontage d'un sous-ensemble unitaire comportant les deux demi-moules enserrant le fond de moule.

Conformément au procédé de changement de moule selon l'invention, le sous-ensemble unitaire est alors apte à être extrait en une unique opération dès l'ouverture des porte-moules et cela grâce aux moyens de fixation selon l'invention qui autorisent l'extraction, comme l'introduction, de chaque coquille suivant un mouvement de translation.

L'invention concerne un système pour la mise en oeuvre du procédé selon la revendication 16.

Selon d'autres caractéristiques du système :
- les moyens de préhension constituent lesdits moyens d'assemblage, les moyens de préhension réalisant la fonction d'assemblage et la fonction de support du sous-ensemble unitaire transportable ;
- les moyens de préhension coopèrent avec une partie du moule qui fait saillie hors du dispositif de moulage ;
- les moyens de préhension sont constitués par une pince comportant des mors aptes à serrer ladite partie du moule ;
- les moyens de préhension sont constitués par une pince commandée en ouverture et fermeture ;
- le système comporte des moyens pour réaliser automatiquement l'étape (d) consistant à enlever le sous-ensemble unitaire d'entre les porte-moules à partir de sa position de référence et l'étape (e) consistant à mettre en place un sous-ensemble unitaire dans ladite position de référence entre les porte-moules en position ouverte ;
- le système comporte d'autres moyens de préhension qui sont en attente avec un nouveau sous-ensemble unitaire de moulage pour réaliser sans attendre, après une phase de démontage suivant les étapes (a) à (d), le montage dudit nouveau sous-ensemble unitaire de moulage sur le dispositif de moulage suivant les étapes (e) à (h) correspondant à la phase de montage.

D'autres caractéristiques et avantages de la présente invention apparaîtront à la lecture de la description détaillée qui va suivre pour la compréhension de laquelle on se reportera aux dessins dans lesquels :

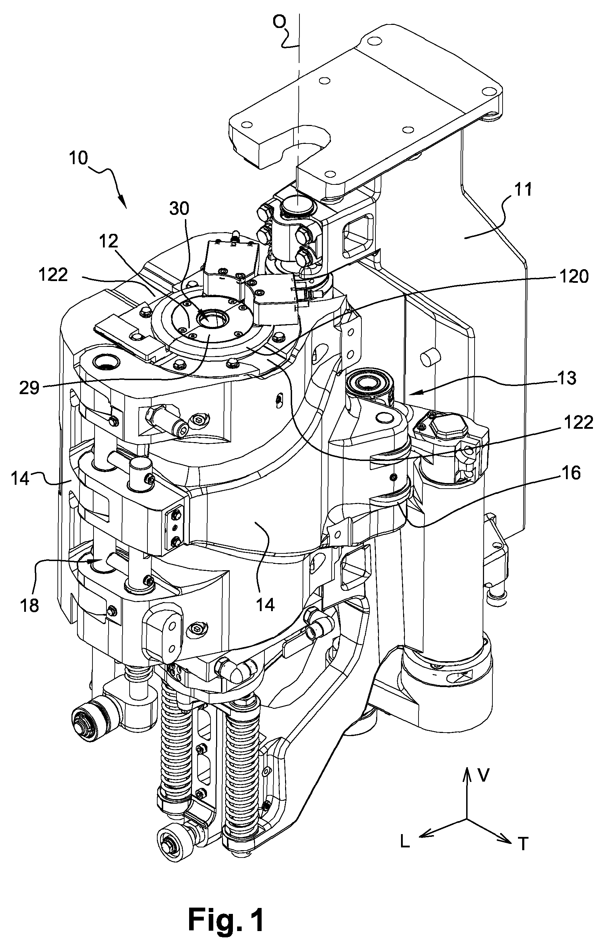

- la figure 1 est une vue en perspective qui représente le dispositif de moulage en place sur un poste d'une machine de fabrication de récipients et qui illustre des porte-moules en position fermée comportant des demi-moules ;

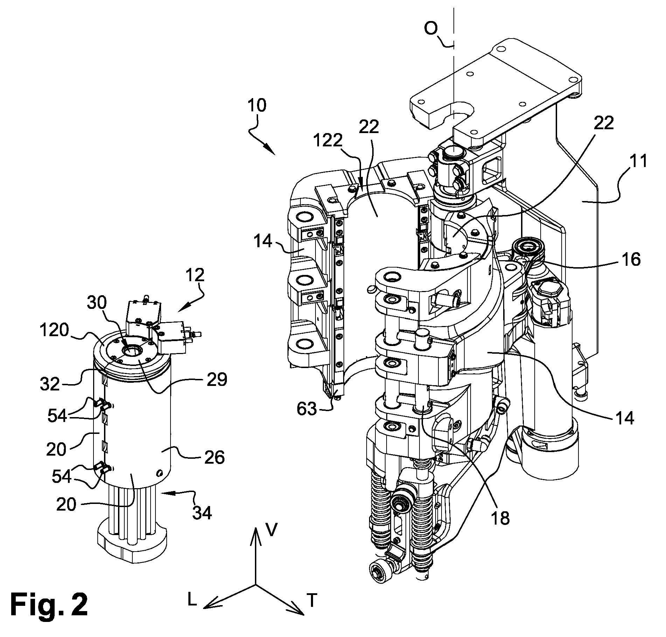

- la figure 2 est une vue en perspective qui représente les principales parties du dispositif de moulage selon la figure 1 qui comporte des moyens de fixation selon un premier mode de réalisation de l'invention et qui illustre les porte-moules en position ouverte, des demi-moules constitués chacun d'un porte-coquille monté dans un logement d'un porte-moule et d'une coquille, les deux coquilles que complète un fond de moule formant un sous-ensemble unitaire propre à être extrait ou introduit entre les porte-moules en vue de son démontage ou montage ;

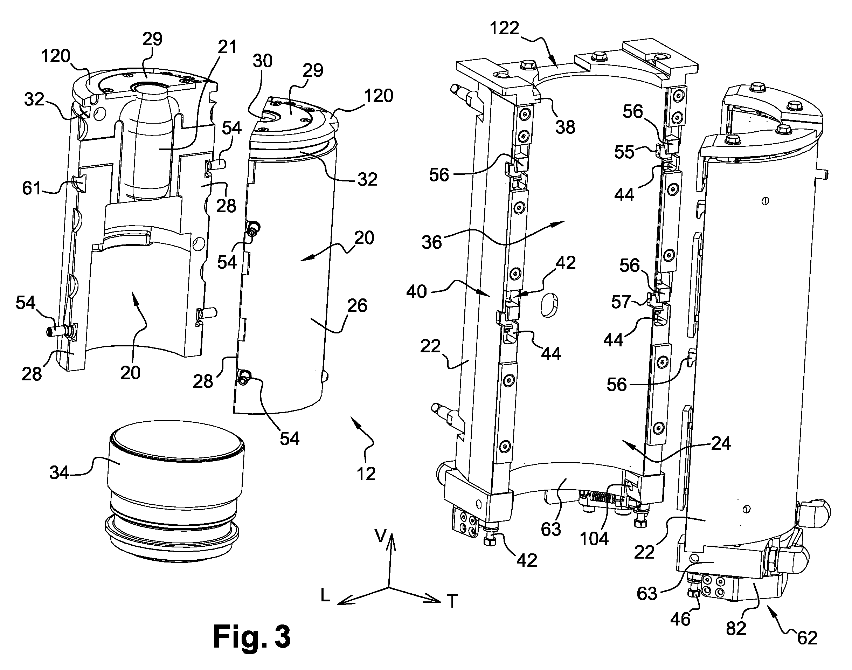

- la figure 3 est une vue en perspective qui représente en éclaté les demi-moules selon le premier mode de réalisation qui, pourvus des moyens de fixation selon l'invention, sont constitués respectivement ici des deux coquilles auxquelles est associé un fond de moule et des deux porte-coquilles destinés à être montés aux porte-moules et interposés entre ces derniers et les coquilles;

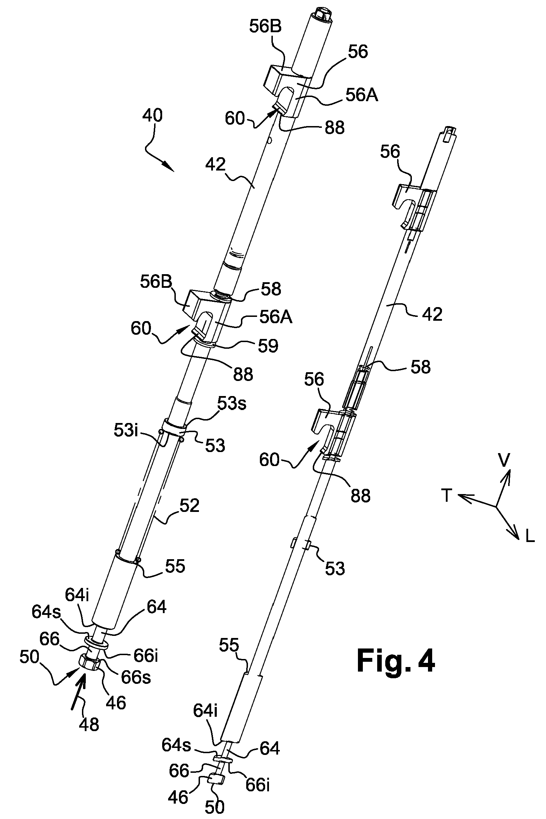

- la figure 4 est une vue en perspective qui représente en détail deux organes d'actionnement dont l'un est en coupe selon un plan d'orientation verticale, chaque organe étant muni de seconds éléments de fixation formés par des crochets dans ce premier mode ;

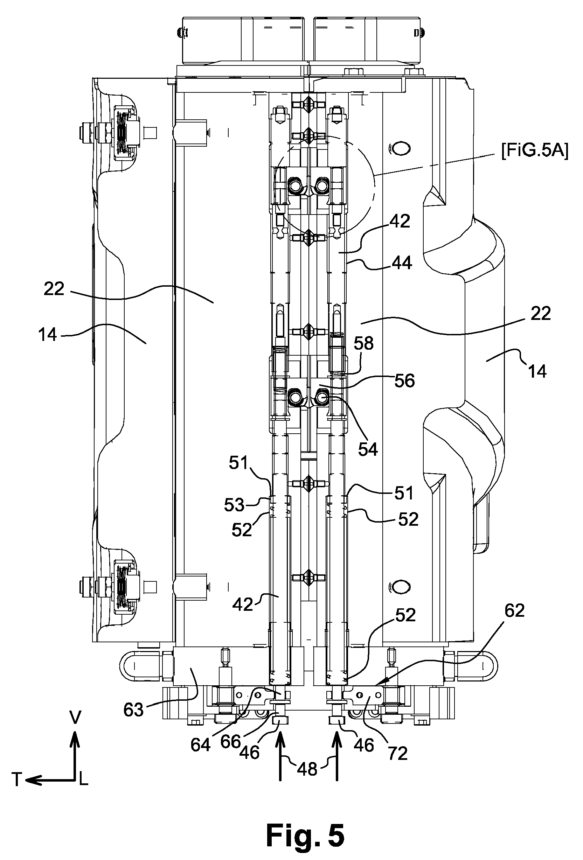

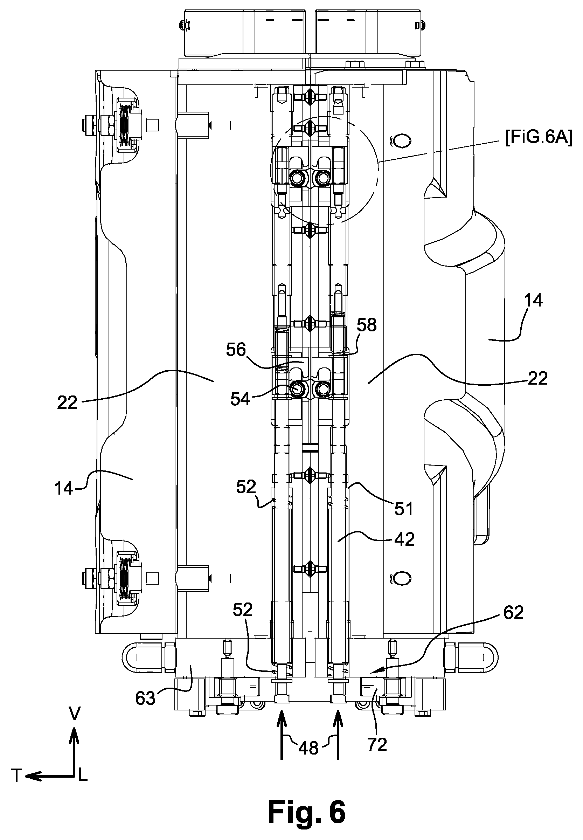

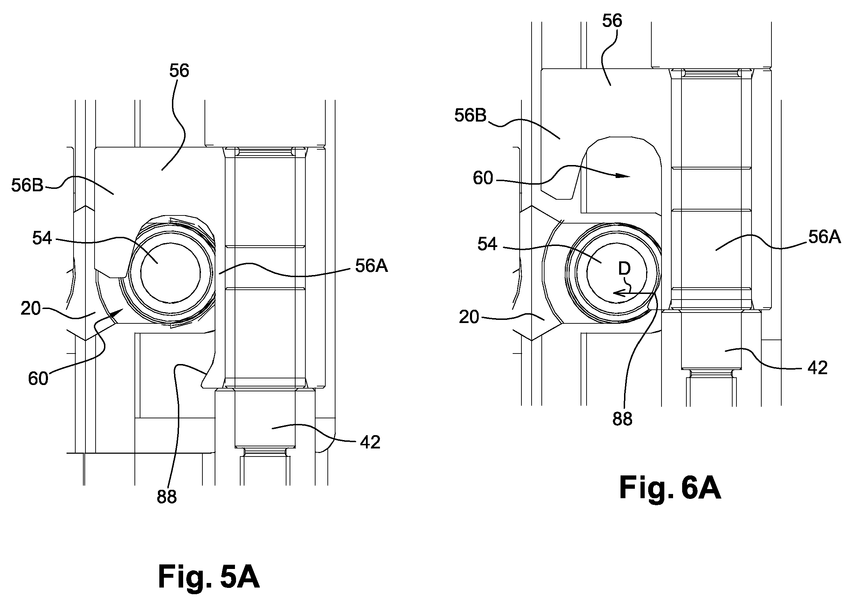

- les figures 5 et 6 sont des vues de face qui représentent un dispositif de moulage en position fermée et qui illustrent grâce à une coupe verticale les moyens de fixation selon le premier mode de réalisation de l'invention, chaque organe d'actionnement étant monté dans le porte-coquille et respectivement montré en position de fixation et de libération, notamment au moyen des vues de détails des figures 5A et 6A représentant les premiers et les seconds moyens de fixation ;

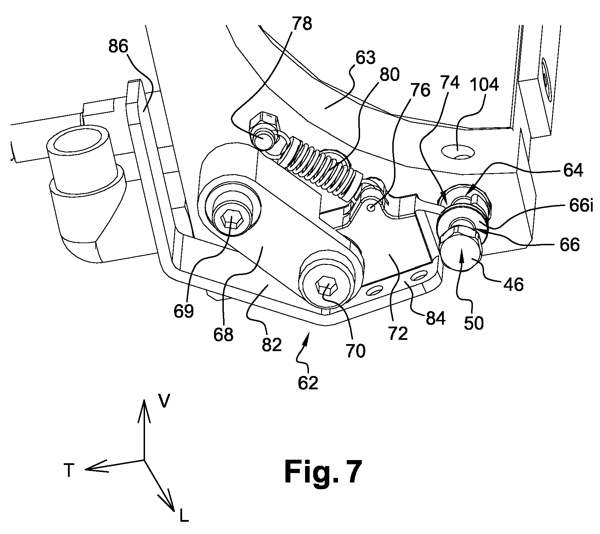

- les figures 7 à 9 sont des vues en perspective qui représentent, vu du dessous du dispositif de moulage, un exemple de réalisation d'un système de verrouillage pouvant être associé à l'organe d'actionnement des moyens de fixation, les figures 7, 8 et 9 illustrant successivement ledit système en position verrouillée de l'organe occupant la position de libération, en position déverrouillée et en position verrouillée de l'organe occupant la position de fixation ;

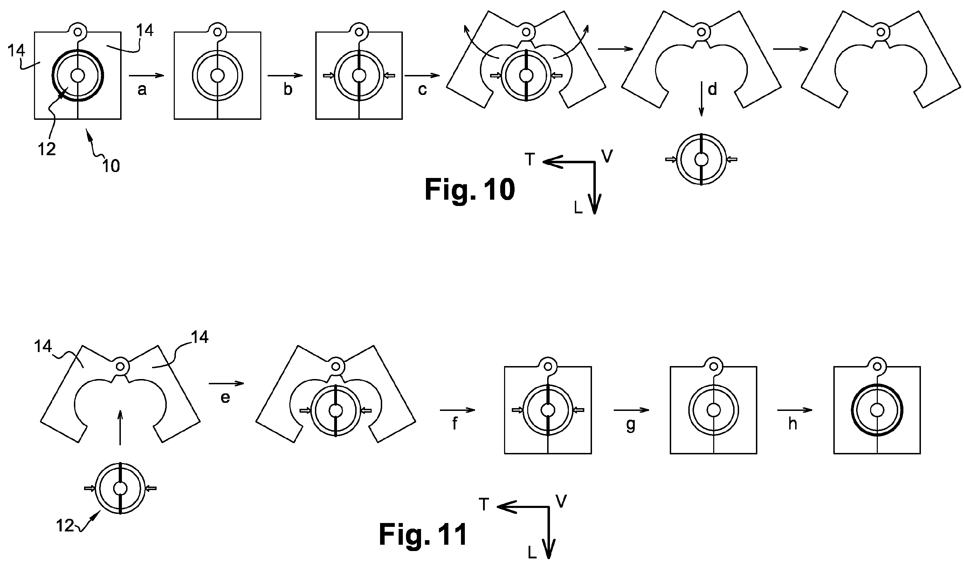

- les figures 10 et 11 sont des vues de dessus qui représentent schématiquement un dispositif de moulage et qui illustrent respectivement la phase de démontage et la phase de montage mises en oeuvre selon le procédé de changement de moule de l'invention.

Dans la suite de la description, on adoptera à titre non limitatif les orientations longitudinale, verticale et transversale en référence au trièdre (L, V, T) représentés sur les figures, étant précisé que les directions longitudinale et transversale sont déterminées de manière fixe par rapport aux porte-moules de sorte que la position ouverte ou fermée occupée est sans incidence sur lesdites orientations.

Par convention, on utilisera à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale qui est plus particulièrement orientée depuis l'extérieur du moule vers l'intérieur du moule.

Dans la suite de la présente description, on utilisera indifféremment et de manière non limitative les termes "coquille" ou "demi-moule" pour désigner la première pièce comportant la demi-empreinte ainsi que par correspondance "porte-coquille" ou "porte-moule" pour désigner la seconde pièce recevant la première, étant précisé que lors d'un changement de moule le porte-coquille restant solidaire du porte-moule est assimilable à un ensemble monobloc.

On décrira maintenant un premier mode de réalisation des moyens de fixation selon l'invention tel que représentés aux figures 1 à 6, ainsi qu'un exemple de réalisation d'un système de verrouillage aux figures 7 à 9.

On a représenté à la figure 1, un dispositif de moulage 10 pour une machine de fabrication (non représentée) de récipients en matière thermoplastique, le dispositif de moulage 10 porté par une console 11 formant par exemple une partie d'un poste de formage d'une telle machine de soufflage.

La machine de soufflage comporte un carrousel circonférentiellement pourvu d'un nombre "N" déterminé de poste de formage comportant des moyens (non représentés) associés au dispositif de moulage 10 pour la transformation de la préforme en récipient, par exemple des moyens de soufflage ou d'étirage-soufflage agencés au-dessus du dispositif de moulage 10.

Le dispositif de moulage 10 est donc destiné à équiper une machine de fabrication de récipients en matière thermoplastique par formage d'une préforme préalablement chauffée au moyen d'un fluide sous pression, en particulier des bouteilles.

Le dispositif de moulage 10 représenté à la figure 1 ne constitue toutefois qu'un exemple non limitatif du type de dispositif de moulage 10 qui, équipant une telle machine de type "rotatives", est susceptible de recevoir application des moyens de fixation réalisés selon les enseignements de l'invention.

Comme on peut le voir sur la figure 1, le dispositif de moulage 10 comporte au moins un moule 12 constitué de deux demi-moules, respectivement une demi-moule gauche et un demi-moule droit.

Les deux demi-moules formant le moule 12 sont destinés à être respectivement supportés par deux porte-moules 14, également respectivement gauche et droit, qui sont montés mobiles l'un par rapport à l'autre autour d'un axe O de rotation.

Le dispositif de moulage 10 comporte à cet effet un dispositif de fixation comportant des moyens de fixation qui sont aptes à fixer de manière démontable aux porte-moules 14 chaque demi-moule occupant une position montée ou position centrale de référence.

Le dispositif de moulage 10 illustré à la figure 1 est destiné à équiper un poste de soufflage d'une machine de fabrication de type "rotative", c'est-à-dire comportant généralement un carrousel à la circonférence duquel sont disposés des postes comprenant chacun un dispositif de moulage 10 associé par exemple à des moyens de soufflage ou d'étirage-soufflage (non représentés).

S'agissant des moyens de formage tels que des moyens de soufflage ou d'étirage-soufflage précités, encore parfois appelés et réalisés sous la forme d'une tuyère de soufflage, on se reportera à titre d'exemple au document FR-2.764.544 pour de plus amples détails.

Dans l'exemple représenté, les porte-moules 14 sont constitués sous la forme de deux structures porteuses montées pivotantes autour d'un axe O commun de rotation, l'axe O de rotation s'étendant ici verticalement selon le trièdre (L, V, T).

Chaque porte-moule 14 comporte, selon la direction longitudinale, une partie arrière qui est complémentaire de la partie arrière de l'autre porte-moule et qui est conformée pour s'interpénétrer avec cette dernière afin de former une articulation 13, telle une charnière dont les deux ferrures seraient toutefois pivotantes autour de l'axe O de rotation.

En variante, seulement l'un des porte-moules est monté mobile tandis que l'autre porte-moule est fixe, le porte-moule mobile étant commandé en déplacement entre lesdites positions ouverte ou fermée.

Les porte-moules 14 sont dès lors susceptibles de s'écarter mutuellement l'un de l'autre en pivotant respectivement autour de l'axe O et sont en conséquence montés mobiles en rotation entre au moins une position fermée (figure 1) et une position ouverte (figure 2).

En raison de la cinématique des porte-moules 14, un tel dispositif de moulage 10 est encore appelé moule "portefeuille" (ou *"book-like opening" en anglais).*

De manière connue, l'entraînement des porte-moules 14 entre les positions ouverte et fermée est obtenu par un système de bras 16 de traction (voir figure 2) dont une extrémité est montée articulée sur les porte-moules 14 et dont l'autre extrémité est reliée à des moyens de commande associés, de préférence du type à galet et à came.

Une articulation des porte-moules 14 de ce type et des moyens de commande en ouverture et en fermeture associés sont par exemple décrits dans le document WO-A1-2004/018181 auquel on se reportera avantageusement pour de plus amples détails.

Le dispositif de moulage 10 comporte encore un verrou 18 qui, agencé longitudinalement en partie avant, soit à l'opposé de l'articulation pivotante autour de l'axe O de rotation, est destiné à assurer le verrouillage des deux porte-moules 14 en position fermée.

Un tel verrou 18 est également connu et ne sera donc pas décrit plus en détail, ledit verrou 18 ayant notamment pour fonction de prévenir toute ouverture inopinée lors des opérations de transformation par injection d'un fluide sous pression, tel que de l'air sous pression dans le cas du soufflage, pour lesquelles les pressions finales peuvent atteindre 40 bars.

Pour de plus amples détails sur la structure et le fonctionnement d'un verrou 18, on pourra par exemple se reporter au document FR-2.646.802.

Bien entendu, il ne s'agit que d'un exemple car il existe de nombreux verrous différents mais équivalents susceptibles d'assurer la fonction de verrouillage.

De préférence et tel qu'illustré à la figure 3, le dispositif de moulage 10 est ici du type dans lequel chaque demi-moule du moule 12 est réalisé en deux parties distinctes, respectivement une coquille 20 munie de la demi-empreinte 21 du récipient à fabriquer et un porte-coquille 22 destiné à supporter la coquille 20 et apte à être lui-même solidarisé à l'un des porte-moules 14.

Une telle conception du moule 12 présente de nombreux avantages notamment décrits dans le document EP-B1-0.821.641 précité.

En variante, chaque demi-moule est néanmoins susceptible d'être réalisé en une seule pièce soit monobloc, apte à être fixée sur l'un des porte-moules 14 par des moyens de fixation.

Chaque coquille 20 comporte une demi-empreinte 21 du récipient final qui est réalisée en creux dans une face interne 24. Chaque face interne 24 est ici une face plane verticale qui est formée par la face de section du cylindre formant le moule 12.

Au cours de la fabrication, lorsque les faces internes 24 sont accolées l'une à l'autre selon un plan vertical de moulage pour former l'empreinte du récipient à fabriquer, les coquilles 20 (ou demi-moules) indépendantes l'une de l'autre sont alors dites en position jointe.

Chaque coquille 20 comporte une face externe 26, opposée à la face interne 24, qui présente globalement la forme d'un demi-cylindre de révolution sensiblement coaxial à l'axe X de l'empreinte du récipient qui s'étend verticalement.

Avantageusement, il est prévu des moyens de centrage de manière à recentrer angulairement le moule 12 par rapport aux porte-moules 14, tels qu'un pion saillant à partir de la face externe 26 de la coquille 20 destiné à pénétrer dans un trou complémentaire de la face interne du porte-coquille 22.

Chaque coquille 20 présente deux bords 28, rectilignes et d'orientation verticale, par lesquels se relient les faces interne 24 et externe 26 de la coquille 20.

Lorsque les porte-moules 14 sont en position fermée, les deux coquilles 20 réunies ensemble déterminent une face supérieure horizontale présentant centralement une ouverture 30 destinée à permettre l'introduction de la préforme.

De préférence, la face supérieure de chaque coquille 20 est formée par une plaque 29 distincte, rapportée solidairement sur chaque coquille 20. En position fermée, les plaques 29 réunies déterminent une surface horizontale, surface avec laquelle est destinée à venir en contact l'extrémité inférieure d'une tuyère (non représentée) comprenant les moyens de soufflage ou d'étirage-soufflage.

Les coquilles 20 comportent encore dans leur partie supérieure, juste en dessous de la face supérieure horizontale, une rainure 32 qui s'étend circonférentiellement de manière continue autour des deux coquilles 20 lorsqu'elles sont réunies pour obtenir l'empreinte.

Lorsque le récipient à fabriquer présente un fond de forme complexe, en particulier pétaloïde, des problèmes de démoulage sont alors susceptibles de survenir.

C'est la raison pour laquelle, on prévoit avantageusement un fond de moule séparé, distinct des demi-moules ou comme dans l'exemple de réalisation représenté sur la figure 3 distinct des coquilles 20, ledit fond de moule comportant une empreinte (non représentée) du fond du récipient complémentaire des demi-empreintes 21.

Avantageusement, les formes de la coquille 20 et du porte-coquille 22 sont complémentaires de manière que le contact de la face externe 26 de la coquille 20 et de la face interne 36 du porte-coquille 22 soient en totalité ou en partie en contact, plaquée l'une contre l'autre, en particulier pour permettre un transfert thermique par conduction transversalement vers l'extérieur, c'est-à-dire de la coquille 20 vers le porte-coquille 22.

Avantageusement, chaque porte-coquille 22 est muni de conduits intérieurs et de raccords associés afin de permettre la mise en circulation d'un fluide de refroidissement (ou de chauffage) dans le porte-coquille 22 comportant la paroi interne 36 contre laquelle est plaquée la coquille 20.

Avantageusement, le dispositif de moulage 10 comporte encore des moyens de positionnement intervenant, entre le porte-coquille 22 et la coquille 20 formant ensemble un demi-moule, notamment par coopération de formes telles que des nervures/gorges coopérant ensemble pour assurer au moins un positionnement selon la direction verticale.

Dans l'exemple de réalisation, le dispositif de moulage 10 comporte une pièce supérieure, ici solidaire du porte-coquille 22, dont un bord interne 38 pénètre dans la rainure circulaire 32 de chaque coquille 20.

Le dispositif de moulage 10 comporte un dispositif de fixation muni de moyens de fixation 40 aptes à fixer de manière démontable au porte-moule 14 chaque demi-moule occupant une position montée ou centrale de référence.

Dans l'exemple de réalisation, le porte-coquille 22 - bien qu'amovible - reste monté à demeure sur le porte-moule 14 et solidaire de celui-ci dès lors que seul le démontage de chaque coquille 20 comportant la demi-empreinte 21 est nécessaire pour procéder à un changement de moule, par exemple en vue de la fabrication d'un autre récipient.

En conséquence, le dispositif de moulage 10 comporte également des moyens de liaison réversible intervenant entre chaque porte-moule 14 et le porte-coquille 22 pour les fixer solidairement ensemble.

Plus précisément, les moyens de fixation 40 précités sont en conséquence ceux destinés à bloquer la coquille 20 sur le porte-coquille 22 puisque dans le présent exemple le demi-moule est réalisé en deux parties distinctes (et non monobloc).

Ainsi, dans le cas d'un dispositif de moulage 10 comportant pour chaque porte-moule 14 et un demi-moule du moule 12 monobloc associé, les moyens de fixation 40 interviennent alors pour fixer chaque demi-moule directement au porte-moule 14.

Conformément à l'invention, les moyens de fixation 40 du dispositif de fixation de chaque demi-moule au porte-moule 14 sont aptes à être commandés en déplacement entre au moins une position de fixation et une position de libération lorsque les porte-moules 14 sont en position fermée.

Les moyens de fixation 40 de chaque demi-moule, ici chaque coquille 20, au porte-moule 14 sont aptes à être commandés sélectivement pour fixer ou libérer chaque demi-moule ou coquille 20 lorsque les porte-moules 14 sont en position fermée.

Avantageusement, les moyens de fixation 40 selon l'invention sont en particulier aptes à autoriser, suivant un mouvement de translation, une introduction ou une extraction d'un sous-ensemble unitaire formé d'au moins les demi-moules assemblés.

On décrira maintenant à titre non limitatif un premier mode de réalisation de tels moyens de fixation selon l'invention.

Les moyens de fixation 40 de chaque demi-moule au porte-moule 14, c'est-à-dire dans l'exemple de chaque coquille 20 sur le porte-coquille 22, sont de type mécanique et résultent de la coopération de formes entre deux éléments liés respectivement à chacune des pièces.

Avantageusement, les moyens de fixation 40 comportent au moins un organe d'actionnement 42 qui est représenté en détail à la figure 4, respectivement en perspective et en coupe selon un plan vertical.

Avantageusement, l'organe d'actionnement 42 comporte au moins une partie de commande 46 qui est apte à être commandée en déplacement depuis l'extérieur du dispositif de moulage 10, c'est-à-dire sans nécessairement requérir que les porte-moules 14 soient en position ouverte pour autoriser l'accès aux moyens de fixation 40.

Grâce au fait que la commande des moyens de fixation s'effectue quelle que soit la position ouverte ou fermée des porte-moules 14 du dispositif de moulage 10, on s'affranchit de l'obligation d'ouvrir les porte-moules comme cela était auparavant obligatoire et peu pratique pour atteindre les moyens de fixation.

De préférence, l'organe d'actionnement 42 est porté par le dispositif de moulage 10, plus précisément par le demi-moule ou ici par le porte-coquille 22.

En variante, l'organe d'actionnement 42 pourrait également être porté par la coquille 20. Toutefois, on cherche généralement à concevoir le dispositif de moulage 10 de manière à avoir un moule 12 qui soit aussi simple que possible et par conséquent de moindre coût de fabrication.

L'organe d'actionnement 42 portant les moyens de fixation 40 est monté mobile entre au moins une position de fixation et une position de libération qui sont respectivement représentées aux figures 5 et 6.

L'organe d'actionnement 42 est porté par le dispositif de moulage 10, de préférence monté sur le porte-coquille 22 dans chaque bord duquel est aménagé à cette fin au moins un logement 44 complémentaire.

Avantageusement, les moyens de fixation 40 sont agencés sur au moins un côté à l'interface des bords, ici verticaux, du porte-coquille 22 et de la coquille 20 respectivement (du porte-moule et du demi-moule dans une réalisation en deux parties).

Les moyens de fixation 40 et en particulier ici l'organe d'actionnement 42 sont intégrés dans le dispositif de moulage 10 de manière que celui-ci soit notamment compact.

En effet, il importe pour une machine de soufflage rotative que chaque dispositif de moulage présente un encombrement réduit afin de permettre l'implantation du plus grand nombre de postes sur la circonférence du carrousel de la machine et ce sans aucun risque d'interférences au moment de l'ouverture d'au moins un des dispositifs de moulage 10 qui y sont juxtaposés côte à côte.

L'organe d'actionnement 42 des moyens de fixation est en particulier caractérisé par le fait qu'il est apte à être commandé lorsque les porte-moules 14 sont en position fermée.

De préférence, la partie de commande 46 que comporte l'organe d'actionnement 42 s'étend en saillie hors du logement 44, à l'extrémité inférieure du porte-coquille 22.

L'organe d'actionnement 42 des moyens de fixation 40 représenté en détail à la figure 4 présente globalement la forme d'une tringle.

L'organe d'actionnement 42 des moyens de fixation 40 comporte une tige dont un tronçon inférieur constitue la partie de commande 46 du déplacement de l'organe d'actionnement 42.

Avantageusement, l'organe d'actionnement 42 des moyens de fixation 40, ici par l'intermédiaire de la partie de commande 46, est apte à être commandé en déplacement depuis l'extérieur du dispositif de moulage 10 pour provoquer la libération ou la fixation de chaque demi-moule au porte-moule par les moyens de fixation et cela et cela quelle que soit la position ouverte ou fermée des porte-moules 14 du dispositif de moulage 10.

De préférence, lorsque l'organe d'actionnement 42 est monté dans son logement 44, la partie de commande 46 fait saillie à l'extérieur du dispositif de moulage 10, c'est-à-dire s'étend au moins en partie à l'extérieur du logement 44 du porte-coquille 22, de manière à permettre la commande en déplacement dudit organe d'actionnement 42 par des moyens d'actionnement d'un dispositif d'actionnement agencés également à l'extérieur, ici en dessous du dispositif de moulage 10.

En variante non représentée, l'organe d'actionnement 42 est commandé en déplacement depuis l'extérieur du dispositif de moulage 10 sans pour autant que la partie de commande 46 fasse saillie.

A titre d'exemple non limitatif d'une telle variante, la partie de commande 46 de l'organe 42 pourrait être agencée à l'intérieur du logement 44 du porte-coquille 22 ou d'une autre pièce solidaire de sorte que les moyens d'actionnement sont alors conçus pour pénétrer depuis l'extérieur au sein du dispositif afin d'agir sur ladite partie de commande 46.

Bien entendu, il est possible que les moyens d'actionnement soient également intégrés au porte-coquille 22, tout cela procédant en partie du choix du dispositif de commande comportant lesdits moyens d'actionnement.

En effet, l'organe d'actionnement 42 des moyens de fixation 40 est apte à être commandé sélectivement par un dispositif de commande 48 comportant des moyens d'actionnement pour en provoquer le coulissement entre lesdites positions de fixation et de libération des moyens de fixation 40 de chaque coquille 20.

De préférence, l'organe d'actionnement 42 coulisse verticalement entre lesdites positions de fixation et de libération.

En variante non représentée, l'organe d'actionnement 42 est agencé suivant une autre orientation, par exemple pour coulisser selon la direction transversale, dans un plan horizontal orthogonal à la direction verticale.

Toutefois, l'organe d'actionnement 42 est susceptible d'être monté mobile entre les positions de fixation et de libération suivant une autre cinématique qu'en coulissement.

En variante non représentée, l'organe d'actionnement 42 est monté mobile en rotation entre les positions de fixation et de libération tout en agissant sur les moyens de fixation.

Avantageusement, le dispositif de commande 48 comporte des moyens d'actionnement qui coopèrent avec une surface de commande 50 que comporte la partie de commande 46, à l'extrémité libre du tronçon inférieur, de l'organe d'actionnement 42.

De préférence, les moyens de fixation 40 comportent des moyens de rappel élastique 52 qui sollicitent l'organe d'actionnement 42 vers la position de fixation de sorte que ledit organe 42 est rappelé automatiquement vers ladite position de fixation.

On a représenté schématiquement sur les figures 4, 5 et 6 le dispositif de commande 48 par une flèche.

L'organe d'actionnement 42 monté dans le logement 44 du porte-coquille 22 est apte à coulisser à l'encontre d'un organe de rappel élastique 52, tel qu'un ressort de compression.

Le ressort de rappel élastique 52 est monté autour de l'organe d'actionnement 42 qui en traverse les spires, par exemple autour du tronçon inférieur de l'organe 42 et disposé verticalement au dessus de la partie de commande 46 située à l'extrémité inférieure.

Comme on peut mieux le voir sur les coupes des figures 5 et 6, l'extrémité supérieure du ressort de rappel élastique 52 est en appui contre une face inférieure 53i d'une bague 53, laquelle bague 53 est destinée à prendre appui par sa face supérieure 53s contre un épaulement 51 prévu à cet effet dans le logement 44 et l'extrémité inférieure du ressort 52 coopère avec une face supérieure d'un épaulement 55 de l'organe d'actionnement 42.

Lorsque l'organe d'actionnement 42 est déplacé, au moyens d'un dispositif de commande 48, de la position de fixation illustrée à la figure 5 vers la position de libération illustrée à la figure 6, le ressort de rappel 52, qui est alors comprimé, exerce un effort de rappel orienté verticalement vers le bas sur l'épaulement 55 de l'organe d'actionnement 42.

En variante, l'organe d'actionnement 42 ne comporte pas de ressort de rappel élastique 52 de sorte que le coulissement de l'organe 42 entre ses positions de fixation et de libération est alors fonction de l'effort appliqué sur la partie 46 par les moyens d'actionnement du dispositif de commande 48.

Avantageusement, les moyens de fixation 40 sont intégrés au dispositif de moulage 10 pour obtenir un dispositif compact.

Une telle compacité du dispositif de moulage est particulièrement importante pour une machine rotative où le nombre N de postes, pour un diamètre donné de carrousel, en découle en partie directement, car les postes ou dispositifs de moulage du type en portefeuille requièrent en effet un espace minimal entre deux postes consécutifs pour l'ouverture par rotation autour de l'axe O des porte-moules.

Avantageusement, les moyens de fixation 40 sont au moins en partie intégrés à l'intérieur du dispositif de moulage 10 et sont agencés entre le bord 28 de la coquille 20 (ou demi-moule) et le bord en vis-à-vis du porte coquille 22 (ou porte-moule), lesdits bords étant respectivement parallèles à l'axe O de rotation, de manière à fixer la coquille 20 (ou demi-moule) sur l'un et/ou l'autre de ses bords 28.

De préférence, les moyens de fixation 40 sont agencés, de part et d'autre de la demi-empreinte 21, sur chaque bord 28 de la coquille 20 (ou demi-moule), soit ici diamétralement opposé selon la direction longitudinale, au niveau du plan vertical de moulage ou plan joint.

Les moyens de fixation 40 comportent respectivement au moins un élément de fixation 54 qui est solidaire de chaque demi-moule, ici de chaque coquille 20, et au moins un autre élément de fixation 56 qui, complémentaire dudit élément 54, est apte à être déplacé par l'organe d'actionnement 42.

Dans ce mode de réalisation, ledit au moins un élément de fixation solidaire de chaque demi-moule est un premier élément de fixation 54 de type mâle, tel qu'un pion, et ledit au moins un autre élément de fixation 56 lié à l'organe d'actionnement 42 est un second élément de fixation de type femelle, tel qu'un crochet.

De préférence, ledit au moins un second élément de fixation 56 est porté par l'organe d'actionnement 42 de sorte que le coulissement de l'organe 42 entre les positions de fixation et de libération s'accompagne simultanément du déplacement du second élément de fixation 56.

En variante non représentée, le second élément de fixation 56 est porté par une autre pièce, telle que le porte-coquille 22 (ou le porte-moule 14) et par exemple disposé dans le logement 44, et le second élément 56 est monté mobile entre une première position et une deuxième position, respectivement dites par analogie de fixation de libération.

Dans une telle variante, l'organe d'actionnement 42 est avantageusement apte à provoquer le déplacement dudit second élément entre lesdites première et deuxième positions lorsqu'il est lui-même commandé en déplacement par un dispositif de commande 48 pour coulisser entre au moins deux positions correspondant à l'état de fixation ou libération des moyens de fixation 40.

Ainsi, les moyens de fixation 40 et plus particulièrement ledit au moins un second élément 56 est apte à être actionné entre les positions de fixation et de libération par l'organe d'actionnement 42.

Le premier élément de fixation 54 est par exemple constitué par un élément mâle tandis que le second élément est constitué par un élément femelle.

Dans l'exemple de réalisation illustré aux figures, le premier élément de fixation 54 est constitué par un pion tandis que le second élément de fixation 56 est constitué par un crochet de formes complémentaires dudit pion 54 avec lequel il est destiné à coopérer.

En variante, le premier élément de fixation 54 lié aux demi-moules est un élément femelle, par exemple un cran, tandis que le second élément de fixation 56 est un élément mâle, par exemple un ergot.

Avantageusement dans une telle variante, l'élément femelle correspondant au premier élément de fixation 54 est associé aux coquilles 20 (ou demi-moules) dans lesquelles un élément "en creux", tel qu'un cran, est par exemple obtenu par usinage. Ainsi, les coquilles 20 ou demi-moules qui sont fréquemment manipulées lors des opérations de changement de moules sont dépourvues de toutes parties saillantes naturellement plus exposées à subir des chocs notamment.

De préférence, lorsque l'élément femelle correspondant au premier élément de fixation 54 est associé à chaque coquille 20 (ou un demi-moule), il est encore possible de prévoir au moins deux types différents d'élément femelle.

Ainsi, au moins un bord d'une même coquille peut comporter deux types différents d'élément femelle de manière à permettre le montage et le démontage d'un moule sur un dispositif de moulage d'une machine donnée équipé d'un premier type de dispositif de fixation ou un autre équipé d'un deuxième type de dispositif de fixation comportant respectivement des seconds éléments "mâles" de fixation différents.

En variante, un bord d'une même coquille pourrait également comporter des éléments femelle ou des éléments mâle démontables pour autoriser respectivement une utilisation avec au moins deux dispositifs de fixation différents.

Avantageusement, une coquille 20 (ou un demi-moule) existant est donc susceptible d'être modifié, pour y ajouter un premier ou un second élément de fixation (par exemple un pion ou un cran) afin de permettre une polyvalence d'utilisation dans un dispositif de moulage d'un poste comportant un dispositif de fixation selon l'invention.

Bien entendu il ne s'agit que d'un exemple non limitatif dès lors que de nombreux éléments 54, 56 complémentaires peuvent être utilisés pour réaliser une telle coopération de formes propre à garantir la fixation entre chacune des deux pièces portant respectivement l'un des premier et second éléments.

De préférence et comme illustré par les figures 2 ou 3 pour le premier mode de réalisation, chaque coquille 20 comporte quatre pions 54, deux pions 54 respectivement supérieur et inférieur qui sont superposés l'un au-dessus de l'autre et cela sur chacun des bords 28 de la coquille 20 qui comportent ainsi chacun une paire de pions 54.

De préférence, les pions 54 sont des éléments distincts qui sont rapportés solidairement sur chaque bord 28 de la coquille 20 laquelle comporte à cet effet un logement 61 plus particulièrement visible sur la figure 3 où l'un supérieur des pions 54 a été omis sur la coquille 20 de gauche.

Avantageusement, une telle coquille 20 présente une forme particulièrement simple qui est susceptible d'être obtenue par moulage sans surcoûts de fabrication et il est également possible de modifier aisément des coquilles 20 selon l'état de la technique en y réalisant les modifications nécessaires à l'implantation des pions.

De plus, les pions 54 sont alors susceptibles d'être réalisés dans un matériau choisi, distinct de celui utilisé pour la coquille 20.

En variante, les pions formant les premiers éléments de fixation sont toutefois susceptibles d'être réalisés venus de matière avec la coquille 20, c'est-à-dire réalisés en une seule pièce avec cette dernière.

Avantageusement, chaque coquille 20 comporte des premiers moyens 54 des moyens de fixation 40 qui sont agencés sur chacun de ses bords, diamétralement opposés.

Les moyens de fixation 40 comportent également deux organes d'actionnement 42 associés qui sont agencés chacun dans un logement 44 agencé sur chaque bord du porte-coquille 22.

Chaque organe d'actionnement 42 comporte deux crochets 56 formant les seconds éléments de fixation et qui sont associés respectivement à chaque paire de pions 54 porté par un bord de la coquille 20.

De préférence, chaque organe d'actionnement 42 comporte donc un crochet supérieur 56 et un crochet inférieur 56 destinés à coopérer avec des pions supérieur et inférieur 54.

Avantageusement, l'un des crochets 56 est relié audit organe d'actionnement 42 avec un jeu selon la direction verticale de coulissement, c'est-à-dire par une liaison à jeu présentant une capacité de déplacement relatif du crochet 56 par rapport à l'organe d'actionnement 42.

Pour former ladite liaison à jeu, le crochet inférieur 56 est de préférence lié à l'organe d'actionnement 42 avec interposition d'un organe élastique 58 formant un moyen de rattrapage de jeu apte à garantir le bon positionnement en position de fixation ou de libération de chaque crochet 56 avec le pion 54 associé, notamment en compensant les tolérances.

Grâce à une telle liaison, on garantit le bon positionnement du crochet inférieur 56 indépendamment de celle du crochet supérieur 56 relié fixement à l'organe d'actionnement 42.

Tel qu'illustré par la figure 4, l'extrémité supérieure de l'organe élastique 58 est en appui contre la face inférieure d'un épaulement que comporte l'organe d'actionnement 42 tandis que l'extrémité inférieure sollicite la face supérieure du crochet 56 agencé en dessous dudit ressort 58.

Le crochet inférieur 56 n'est donc pas fixe comme le crochet supérieur 56 et il est libre de se déplacer verticalement par rapport à l'organe d'actionnement 42, à l'encontre du ressort 58 et dans la limite d'un jeu ou débattement déterminé par une face supérieure de butée 59 qui est solidaire de l'organe d'actionnement 42 et avec laquelle le crochet inférieur 56 est susceptible de coopérer.

Chaque crochet 56 présente globalement une forme en "L" inversé comportant une première branche 56A d'orientation verticale liée à l'organe d'actionnement 42 et une deuxième branche 56B, orthogonale à la première et ici d'orientation transversale, qui délimite avec la première branche 56A un logement 60 globalement en "U" dans lequel un pion 54 complémentaire est destiné à s'engager en position de fixation.

Ainsi et tel que décrit précédemment en référence aux figures 5 et 6, la partie de commande 46 de chaque organe 42 est sollicitée sélectivement par des moyens d'actionnement d'un dispositif de commande 48 pour provoquer le déplacement de l'organe d'actionnement 42 entre les positions de fixation et de libération.

La position de fixation correspond dès lors à la position des moyens de fixation 40 dans laquelle chaque crochet 56 coopère avec le pion 54 de la coquille 20 engagé dans le logement 60 et cela afin de plaquer la coquille 20 contre le porte-coquille 22.

Tandis que la position de libération correspond à la position dans laquelle chaque crochet 56 est escamoté afin de ne pas interférer avec le pion 54 de la coquille 20 occupant ladite position montée.

En position montée de la coquille 20, chaque pion 54 pénètre par une encoche 57 dans le logement 44 du porte-coquille 22 dans lequel est monté l'organe d'actionnement 42 portant les crochets 56 de fixation.

En position de fixation illustrée à la figure 5, chaque pion 54 est reçu dans le logement 60 du crochet 56 associé qui l'enserre et assure ainsi la fixation de la coquille 20 dans le porte-coquille 22 au moins selon la direction transversale.

En effet, outre les moyens de fixation 40, chaque coquille 20 est retenue verticalement par la coopération de formes entre le bord circulaire 38 lié au porte-coquille 22 avec la rainure 32 de la coquille 20.

Avantageusement, chaque crochet 56 assure la fixation en exerçant sur le pion 54 un effort de serrage correspondant à une force, dite d'attraction, présentant au moins une composante d'orientation transversale qui s'exerce sur le pion 54 de l'intérieur vers l'extérieur de manière à plaquer intimement la face externe 26 de la coquille 20 contre la face interne 36 du porte-coquille 22.

Grâce à la force d'attraction résultant de la coopération entre les pions 54 et les crochets 56 des moyens de fixation 40, la face externe 26 de la coquille 20 et la face interne 36 du porte-coquille 22 sont en contact de conduction thermique l'une avec l'autre, en tout ou en partie selon les applications.

Avantageusement, on obtient ainsi un transfert thermique satisfaisant vers le porte-coquille 22 pourvu des moyens de refroidissement par circulation de fluide.

Selon le premier mode de réalisation, le dispositif de moulage 10 comporte avantageusement un système de verrouillage 62 qui, associé aux moyens de fixation 40, est commandé sélectivement pour verrouiller l'organe d'actionnement 42 en position de fixation et/ou en position de libération.

On décrira maintenant de manière non limitative un exemple de réalisation d'un tel système de verrouillage 62 qui est plus particulièrement représenté aux figures 7 à 9.

Le système de verrouillage 62 est par exemple monté à l'extérieur sur une platine 63 agencée en partie inférieure du dispositif de moulage 10 et qui est solidaire du porte-coquille 22.

Le système de verrouillage 62 est adjacent à la partie de commande 46, le verrouillage étant de préférence réalisé sur le tronçon inférieur de l'organe d'actionnement qui, agencé verticalement juste au dessus de ladite partie de commande 46, s'étend également en saillie vers le bas hors du porte-coquille 22.

Tout d'abord, comme illustré à la figure 4, l'organe d'actionnement 42 comporte respectivement un premier cran 64 et un deuxième cran 66, en variante au moins un cran.

Les premier et deuxième crans 64 et 66 sont formés respectivement par une gorge annulaire qui est réalisée dans le tronçon inférieur de l'organe d'actionnement 42, verticalement au-dessus de la partie de commande 46, le premier cran 64 étant lui-même agencé au-dessus du deuxième cran 66.

Le premier cran 64 est délimité verticalement par une face inférieure d'appui 64i et par une face supérieure 64s, de même que le deuxième cran 66 est délimité par une face inférieure d'appui 66i et une face supérieure de butée 66s.

Le système de verrouillage 62 comporte un support 68 dont une première partie est fixée solidairement à la platine 63 par l'intermédiaire d'un premier organe de fixation 69, tel qu'une vis, et dont une deuxième partie est fixée solidairement à la platine 63 par l'intermédiaire d'un deuxième organe de fixation 70.

Le système de verrouillage 62 comporte au moins un élément de verrouillage 72 formé par un loquet qui est monté pivotant par l'intermédiaire de l'une de ses extrémités autour du deuxième organe de fixation 70 et dont l'autre extrémité libre de verrouillage comporte une encoche 74 de verrouillage de forme complémentaire des premier et deuxième crans 64, 66.

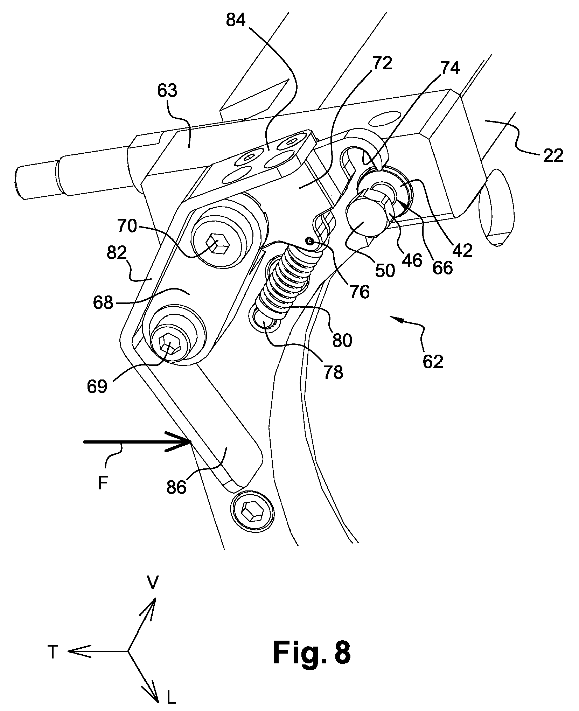

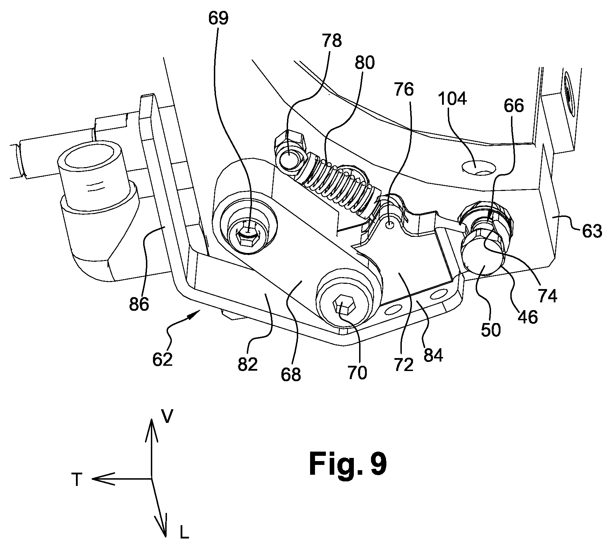

Le loquet de verrouillage 72 est monté mobile entre :
- une position déverrouillée illustrée à la figure 8 dans laquelle le loquet de verrouillage 72 est escamoté pour laisser l'organe d'actionnement 42 libre de coulisser entre ses positions de fixation et de libération, et
- une position verrouillée dans laquelle le loquet de verrouillage 72 coopère sélectivement avec le premier cran 64 (figure 7) ou avec le deuxième cran 66 (figure 9) de l'organe d'actionnement 42, lesdits crans 64, 66 correspondant respectivement à la position de fixation et à la position de libération de l'organe d'actionnement 42 des moyens de fixation 40.

Le loquet de verrouillage 72 comporte, entre lesdites extrémités, une patte 76 à laquelle est rattachée une extrémité d'un organe de rappel élastique 80, ici un ressort, dont l'autre extrémité est rattachée sur un plot 78 solidaire de la platine 63 et formant un point d'ancrage fixe.

Le système de verrouillage 62 comporte des moyens de commande 82 qui sont aptes à provoquer le déplacement du loquet de verrouillage 72 de la position verrouillée vers la position déverrouillée à l'encontre de l'organe de rappel élastique 80.

Ainsi, l'organe élastique 80 sollicite le loquet de verrouillage 72 en exerçant sur la patte 76 du loquet 72 un effort de rappel propre à rappeler automatiquement le loquet 72 vers la position verrouillée, dans l'un ou l'autre des crans 64, 66.

Les moyens de commande 82 du système de verrouillage 62 sont par exemple réalisés sous la forme d'une palette présentant globalement une forme en "U" ouvert.

La palette de commande 82 comporte une première partie 84 qui est rapportée à fixation, par exemple par vissage, sur la partie du loquet de verrouillage 72 opposée à la patte 76, et une partie intermédiaire qui se prolonge par une deuxième partie 86 formant l'extrémité libre de la palette de commande 82.

Le déverrouillage est obtenu en appliquant un effort de déverrouillage sur ladite partie 86 pour provoquer le pivotement du loquet de verrouillage 72 de la position de verrouillage vers la position de déverrouillage, à l'encontre de l'organe de rappel 80 du loquet 72.

Avantageusement, le support 68 forme une butée dite de fin de course contre laquelle une partie de la palette de commande 82 vient en appui lorsqu'un effort de déverrouillage est appliqué sur la partie 86 et qui correspond à une course suffisante pour garantir le déverrouillage du loquet 72 à l'encontre de l'organe de rappel 80.

De préférence, le système de verrouillage 62 est un système instable pour lequel le seul état stable correspond à la position verrouillée, ainsi le maintien du système en position déverrouillée ne peut être obtenu qu'en appliquant en permanence un effort de déverrouillage F suffisant sur la partie 86 de la palette de commande 82.

On a représenté schématiquement sur la figure 8 au moyen d'une flèche F un tel effort de déverrouillage F appliqué sur la partie 86 de la palette de commande 82.

Si l'on cesse d'appliquer un tel effort ou que l'effort appliqué sur le loquet 72 par l'intermédiaire de la palette 82 est inférieur à l'effort de rappel exercé par l'organe de rappel élastique 80, ledit organe 80 rappelle alors automatiquement le loquet de verrouillage 72 en position verrouillée.

Comme on peut le voir sur les figures 7 et 9, lorsque le loquet de verrouillage 72 est en position verrouillée dans le premier cran 64, le loquet 72 est en appui contre la face inférieure d'appui 64i, de même que lorsque le loquet de verrouillage 72 est en position verrouillée dans le deuxième cran 66, le loquet 72 est en appui contre la face inférieure d'appui 66i.

Un système de verrouillage 62 tel que celui de l'exemple de réalisation qui vient d'être décrit en référence aux figures 7 à 9 est facultatif dès lors qu'il ne conditionne pas le fonctionnement des moyens de fixation 40 selon l'invention.

Cependant, un tel système de verrouillage 62 présente des avantages certains dont les principaux sont décrits ci-après.

Le système de verrouillage 62 permet tout d'abord de garantir la fixation de la coquille 20 au porte-coquille 22 et cela même si le ressort de rappel 52 qui sollicite l'organe d'actionnement 42 vers la position de fixation venait à connaître une défaillance, par exemple une rupture.

C'est la raison pour laquelle, l'organe d'actionnement 42 comporte le premier cran 64 permettant de verrouiller la position de fixation.

Ainsi qu'on l'aura compris, l'organe d'actionnement 42 pourrait par conséquent ne pas comporter un tel premier cran 64 mais uniquement un second cran 66 de telle sorte que seul la position de libération serait alors susceptible d'être verrouillée par le système de verrouillage 62.

Le système de verrouillage 62 permet ensuite, grâce au second cran 66 de verrouillage de l'organe d'actionnement 42 en position de libération, de n'exercer que temporairement et non de manière permanente l'effort de déverrouillage appliqué par les moyens d'actionnement du dispositif de commande 48 sur la partie de commande 46.

En effet, le coulissement de l'organe d'actionnement 42 de la position de fixation à la position de libération s'effectue à l'encontre du ressort de rappel 52.

Ainsi, en l'absence d'un tel verrouillage de l'organe d'actionnement 42 une fois ladite position de libération atteinte, il serait nécessaire d'appliquer en permanence un effort de déverrouillage supérieur à l'effort de rappel du ressort 52 faute de quoi ce dernier provoquerait immédiatement le rappel de l'organe d'actionnement 42 vers la position de fixation.

Avantageusement, le verrouillage de l'organe d'actionnement 42 en position de libération permet de n'actionner que temporairement les moyens d'actionnement du dispositif de commande 48 au bénéfice notamment d'une économie d'énergie.

Grâce au verrouillage de la position de libération, il est ensuite possible de manipuler chaque coquille 20, par exemple pour procéder à son changement, et cela indépendamment de la présence ou de l'absence d'un dispositif de commande 48, nul effort de déverrouillage ne devant plus être appliqué sur la partie de commande 46.

De plus, la fixation d'une nouvelle coquille 20 est alors susceptible d'être obtenue rapidement et simplement par l'actionnement de la palette 82, comme illustré à la figure 8, en provoquant le déverrouillage du système de verrouillage 62.

En effet, on commande alors automatiquement, en déverrouillant le loquet de verrouillage 72 et du fait de la présence du ressort 52, le rappel de l'organe d'actionnement 42 vers la position de fixation.

On remarquera que, là encore, la présence du dispositif de commande 48 n'est pas nécessaire.

En effet, le dispositif de commande 48 n'est mis en oeuvre dans le premier mode de réalisation représenté aux figures 1 à 15 que pour commander le coulissement de l'organe d'actionnement 42 de la position de fixation à la position de libération et jusqu'au verrouillage de l'organe d'actionnement 42 lorsque la position de libération est atteinte.

De plus, le deuxième cran 66 est plus "large", c'est-à-dire qu'il présente selon la direction verticale une dimension supérieure à celle du premier cran 64 dont les dimensions correspondent ici sensiblement à celles du loquet de verrouillage 72.

Avantageusement, le deuxième cran 66 de l'organe d'actionnement 42 et le loquet de verrouillage 72 sont conformés pour présenter, selon la direction verticale de coulissement, un jeu propre à autoriser un déplacement de l'organe 42 au-delà de la position de libération.

Grâce à quoi, on commande sélectivement, par l'intermédiaire des moyens d'actionnement du dispositif de commande 48, des moyens de décollement 88 du demi-moule, ici de la coquille 20, par rapport au porte-moule 14.

Avantageusement, les moyens de décollement 88 sont constitués par une partie formant rampe qui est portée par chaque crochet 56 et qui est agencée sur la branche verticale 56A du crochet, à l'entrée du logement 60 pour le pion 54.

Comme illustré sur les figures 4 et 6, la rampe de décollement 88 du crochet 56 est apte à exercer sur le pion 54 un effort de décollement lorsque les moyens d'actionnement sollicitent l'organe d'actionnement 42 pour le faire coulisser au-delà de la position de libération, suivant une surcourse déterminée par ledit jeu vertical du deuxième cran 66 correspondant à l'écartement entre la face inférieure d'appui 66i et la face supérieure de butée 66s.

On a représenté schématiquement par une flèche D la composante d'orientation transversale de la force correspondant à l'effort de décollement appliqué sur le pion 54 par la rampe 88 du crochet 56.

On décrira de manière non limitative au moins un exemple de réalisation d'un dispositif de commande 48 des moyens de fixation 40.

Le dispositif de commande 48 est par exemple de type "mécanique" et destiné à être commandé manuellement, c'est-à-dire manipulé directement à la main par un opérateur.

Bien entendu, les moyens d'actionnement pourraient en variante être partiellement ou totalement automatisés, notamment en utilisant un actionneur, tel qu'un vérin ou un moteur commandant une tige.

De plus, un tel actionneur peut être de type pneumatique, hydraulique ou électrique pour fournir aux moyens d'actionnement l'énergie nécessaire à l'application sur la partie de commande 46 de l'organe d'actionnement 42 d'un effort de libération des moyens de fixation 40 à l'encontre de l'organe de rappel élastique 52 de l'organe 42 vers la position de fixation.

Bien entendu, outre le dispositif de commande 48, il est également possible de procéder à l'automatisation de la commande du système de verrouillage 62, par exemple également au moyen de tels actionneurs, pour commander sélectivement le déverrouillage du loquet de verrouillage 72.

Avantageusement, le déverrouillage est alors commandé en synchronisation avec les moyens d'actionnement du dispositif de commande 48 qui agissent sur l'organe d'actionnement 42.

La synchronisation de la commande des actionneurs du système de verrouillage 62 et du dispositif de commande 48 est alors pilotée de manière à déverrouiller le système 62 préalablement et pendant l'actionnement de l'organe 42 par les moyens d'actionnement pour faire coulisser l'organe ainsi libéré de sa position de fixation jusqu'à la position de libération puis à verrouiller de nouveau le système 62 lorsque ladite position de libération est atteinte, une fois le verrouillage de l'organe 42 en position de libération l'actionnement du dispositif de commande 48 peut alors cesser.

A titre d'exemple non limitatif, le dispositif de commande mécanique est constitué par une sauterelle à tige coulissante, un tel dispositif bien connu est encore appelé *"toggle clamp"* en anglais.

Un tel dispositif est apte à transformer un mouvement de rotation en un mouvement de translation.

Avantageusement, le dispositif de commande 48 comporte alors une équerre de fixation grâce à laquelle il est monté à demeure sur la platine 63 du porte-coquille 22 et cela sur chaque porte-coquille 22 du dispositif de commande 48.

Le dispositif de commande 48 comporte un levier qui est monté mobile en rotation entre au moins une première position et une deuxième position autour d'un axe porté par l'équerre.

La première position du dispositif de commande 48 correspond à la position de fixation des moyens de fixation 40 tandis que la deuxième position correspond à la position de libération desdits moyens 40.

Le levier du dispositif 48 est relié à l'extrémité inférieure d'une tige formant un moyen d'actionnement dont l'autre extrémité supérieure est avantageusement liée en déplacement à l'extrémité inférieure de l'organe d'actionnement 42 des moyens de fixation 40.

Lorsque le levier est déplacé, par exemple suivant une rotation de 180°, depuis sa première position correspondant à la position de fixation jusqu'à sa deuxième position correspondant à position de libération, la tige coulisse alors verticalement de bas en haut.

Les moyens de fixation 40 sont agencés de manière à permettre une extraction ou introduction de chaque demi-moule hors ou dans le logement du porte-moule 14 selon un mouvement de translation globalement orthogonal au porte-moule 14.

Avantageusement, les moyens de fixation 40 sont disposés sur chacun des deux bords de la coquille 20 et du porte-coquille 22 de manière à permettre un tel mouvement de translation.

Bien entendu, les moyens de fixation 40 sont également susceptibles d'être implantés sur une autre partie que les deux bords de la coquille 20 et du porte-coquille 22, notamment entre la face externe de la coquille 20 et la face interne du porte-moule 14 délimitant le logement.

Dans le premier mode de réalisation, les moyens de fixation 40 sont donc doubles de sorte qu'il est nécessaire de commander le déplacement des deux organes d'actionnement 42 agencés pour immobiliser chacun des bords 28 de la coquille 20.

Avantageusement, le dispositif de commande 48 comporte des moyens d'actionnement aptes à actionner, pour chaque demi-moule ou coquille 20, les deux organes d'actionnement 42, de préférence simultanément.

On décrira maintenant un procédé de changement de moule selon l'invention dans lequel l'actionnement des moyens de fixation par le dispositif de commande est mis en oeuvre alors que les porte-moules 14 du dispositif de moulage 10 sont en position fermée et grâce auquel le temps de changement d'un moule est encore réduit de manière substantielle.

De préférence, le moule 12 est donc constitué de deux demi-moules réalisés en deux parties, à savoir pour chacun d'une coquille 20 et d'un porte-coquille 22 comme cela a été indiqué précédemment.

Selon une caractéristique particulièrement avantageuse de l'invention, les moyens de fixation 40 sont également susceptibles d'être commandés lorsque les porte-moules 14 sont en position fermée.

Ainsi, les moyens de fixation 40 selon l'invention sont donc susceptibles d'être commandés lorsque les porte-moules 14 sont en position ouverte et lorsque les porte-moules 14 sont en position fermée.

La partie de commande 46 de l'organe d'actionnement 42 est apte à être commandée en déplacement depuis l'extérieur du dispositif de moulage 10 quelle que soit la position ouverte ou fermée des porte-moules 14 du dispositif de moulage 10.

De préférence et de manière non limitative, la partie de commande 46 de chaque organe d'actionnement s'étend en saillie hors du dispositif de moulage 10 de sorte qu'il est possible d'agir sur la partie de commande 46 indépendamment de la position ouverte ou fermée et tout particulièrement par comparaison avec les solutions connues de l'état de la technique y compris en position fermée.

Bien que les différentes étapes en relation avec les moyens de fixation selon l'invention soient susceptibles d'être mises en oeuvre manuellement par au moins un opérateur, les étapes sont de préférence ainsi automatisées au moyen d'actionneurs appropriés et l'intervention de l'opérateur à tout le moins limitée voir supprimée.

En particulier, une automatisation de la commande du système de verrouillage pour réaliser le déverrouillage du loquet et/ou encore l'actionnement de l'organe 42 permet avantageusement de réduire encore le temps nécessaire pour procéder à un changement de moule 12.

Dans ce procédé de changement de moule 12, on procède aux étapes décrites ci-après alors que les porte-moules 14 du dispositif de moulage 10 sont en position fermée.

De préférence, le dispositif de moulage 10 est préalablement amené dans une zone déterminée de la machine de fabrication en vue du changement de moule.

Dans une machine rotative, une telle zone est par exemple située à l'opposé du côté de la machine dans laquelle on procède à l'introduction des préformes et à l'extraction des récipients fabriqués.

On a représenté très schématiquement aux figures 10 et 11, les étapes du procédé de changement de moule selon l'invention.

Selon le procédé de changement de moule de l'invention, on procède tout d'abord à une étape (a) consistant à commander les moyens de fixation 40 pour libérer chaque demi-moule alors que les porte-moules 14 occupent la position fermée.

Avec des moyens de fixation 40 réalisés selon le premier mode de réalisation, l'étape (a) comporte notamment les sous-étapes décrites ci-après.

Sur la figure 10, le dispositif de moulage 10 est représenté avec les porte-moules 14 en position fermée et les moyens de fixation en position de fixation, ce qui correspond également à la figure 5. On a symbolisé par l'utilisation d'un trait fort la fixation entre le demi-moule ou coquille 20 et le porte-moule 14.

Lorsque les moyens de fixation 40 sont réalisés selon le premier mode de réalisation, l'étape (a) comporte notamment les sous-étapes décrites ci-après.

Selon une première sous-étape (a1), on commande le déverrouillage des systèmes de verrouillage 62 afin de libérer chacun des organes d'actionnement 42 des moyens de fixation 40.

D'une manière générale, la sous-étape (a1) consiste à commander le déverrouillage d'au moins un organe d'actionnement des moyens de fixation occupant une position de fixation pour libérer ledit organe d'actionnement.

Le système de verrouillage 62 selon le premier mode de réalisation ne constitue qu'un exemple non limitatif de moyens aptes à assurer un tel verrouillage d'au moins l'une des deux positions de fixation et de libération.

Comme indiqué précédemment, le dispositif de commande destiné à commander le déplacement, ici en coulissement, de l'organe d'actionnement 42 des moyens de fixation 40 est susceptible d'être constitué par un actionneur, tel qu'un vérin pneumatique ou hydraulique.

Avantageusement, un actionneur est également apte à assurer sélectivement la fonction de verrouillage de l'organe d'actionnement, en particulier dans la position de libération grâce par exemple à un vérin simple effet.

En variante, un vérin double effet est mis en oeuvre lorsque l'on souhaite verrouiller les deux positions de libération et de fixation, notamment la position de fixation indépendamment de tout risque de défaillance d'un organe de rappel élastique de l'organe d'actionnement 42 vers la position de fixation.

La première sous-étape (a1) est mise en oeuvre pour chacune des coquilles 20, avantageusement de manière simultanée.

Pour chaque coquille 20, on utilise des premiers moyens d'actionnement (non représentés) tels qu'un actionneur piloté apte actionner au moins un système de verrouillage 62.

Avantageusement, chaque actionneur est apte à actionner simultanément les deux systèmes de verrouillage d'une coquille 20.

En variante, le système de verrouillage 62 est actionné manuellement par un opérateur qui exerce l'effort de déverrouillage et procède successivement aux sous-étapes pour une coquille 20 puis l'autre coquille 20.

Ainsi, on commande l'actionneur pour que, dans chacun des systèmes 62, le loquet de verrouillage 72 se désengage du premier cran 64 de l'organe d'actionnement 42 et cela afin que l'organe d'actionnement 42 puisse être déplacé en coulissement de sa position de fixation vers sa position de libération.

Comme représenté à la figure 8, l'actionneur piloté est apte à exercer un effort de déverrouillage F, transversalement de l'extérieur vers l'intérieur, sur la partie 86 de chacune des palettes de commande 82 suivant une course déterminée par la venue en butée contre le support 68 de chaque système de verrouillage 62.

Ce faisant, l'actionneur provoque le déverrouillage souhaité dans chaque système de verrouillage 62 associé à l'organe d'actionnement 42, c'est-à-dire le pivotement du loquet de verrouillage 72 autour de son axe jusqu'à la position déverrouillée et cela à l'encontre de l'organe de rappel élastique 80 du loquet 72 vers la position verrouillée.

En effet, chaque loquet 72, entraîné par la partie 84 de la palette dont il est solidaire, pivote vers la position déverrouillée dans laquelle l'encoche 74 du loquet 72 est libre, aucun des crans 64 ou 66 n'y étant plus engagé.

On observera que les parties 86 de chacune des palettes de commande 82 de chaque système de verrouillage associé respectivement à l'un et l'autre des organes d'actionnement 42 sont adjacentes et suffisamment proches l'une de l'autre pour que l'actionneur puisse les solliciter simultanément l'une et l'autre afin de provoquer le déverrouillage de chaque loquet de verrouillage 72 des deux systèmes 62 que comporte une coquille 20.

Comme expliqué précédemment, le système de verrouillage 62 selon l'exemple de réalisation des figures 7 à 9 n'est pas un système bistable, c'est-à-dire que la position déverrouillée n'est pas une position stable de sorte que l'opérateur doit, avec une main, maintenir son effort sur les palettes de commande 82 au moins jusqu'à l'actionnement de l'organe 42 par dispositif de commande 48 (faute de quoi les loquets 72 seront automatiquement rappelés vers sa position verrouillée par les ressorts 80).

En effet, une fois opéré le déverrouillage du système de verrouillage 62 suivant la sous-étape (a1), l'organe d'actionnement 42 est alors libre d'être actionné par le dispositif de commande 48 afin de provoquer son coulissement, à l'encontre du ressort 52, de la position de fixation vers la position de libération.

Bien entendu, la sous-étape (a1) est uniquement mise en oeuvre si le dispositif de moulage 10 comporte un tel système de verrouillage 62 qui, bien qu'il puisse être supprimé, présente différents avantages décrits précédemment.

Selon une deuxième sous-étape (a2), chaque organe d'actionnement 42 étant déverrouillé, on commande le dispositif de commande 48 pour déplacer en coulissement les moyens de fixation 40 de la position de fixation à la position de libération.

D'une manière générale, la sous-étape (a2) consiste à commander le dispositif de commande 48 pour déplacer en coulissement un organe d'actionnement 42 des moyens de fixation 40 depuis une position de fixation jusqu'à une position de libération.

Tel qu'illustré à la figure 6, la mise en oeuvre de la deuxième sous-étape (a2) est bien entendu fonction du dispositif de commande 48 utilisé.

Avantageusement, le dispositif de commande 48 est également un actionneur apte à solliciter sélectivement la partie de commande 46 de chacun des deux organes d'actionnement 42 associés à la coquille 20 afin d'exercer à l'encontre du ressort 52 de chacun un effort de libération qui est propre à faire coulisser chaque organe 42 vers la position de libération.

En variante, le dispositif de commande 48 est un dispositif de type mécanique qui est apte à être actionné manuellement par un opérateur, en agissant par exemple sur un levier.

Lorsque la position de libération est atteinte (figure 6), on commande selon une troisième sous-étape (a3) le verrouillage de l'organe d'actionnement 42 en position de libération.

Bien entendu une telle sous-étape (a3) n'est mise en oeuvre qu'en présence d'un système de verrouillage 62.

D'une manière générale, la sous-étape (a3) consiste donc à commander le verrouillage d'au moins un organe d'actionnement des moyens de fixation occupant une position de libération pour maintenir ledit organe d'actionnement en position de libération.

Le dispositif de commande 48 est apte à maintenir en position de libération chaque organe d'actionnement 42 au moins jusqu'au verrouillage selon la sous-étape (a3).

Pour obtenir le verrouillage, l'actionneur cesse d'exercer son effort sur les palettes de commande 82.

La cessation d'application de l'effort sur les palettes de commande 82 a pour effet que chaque loquet de verrouillage 72 de chaque système 62 est automatiquement rappelé vers sa position verrouillée et s'engage, du fait du coulissement de l'organe de commande 42 vers la position de libération, dans le deuxième cran 66 qui se trouve en vis-à-vis et comme cela est représenté à la figure 9.

Le loquet de verrouillage 72 étant en appui contre la face inférieure d'appui 66i, l'organe d'actionnement 42 qui est en position de libération se trouve alors bloqué par le loquet de verrouillage 72 (position verrouillée).

Avantageusement, le rappel automatique du loquet 72 vers la position verrouillée facilite cette manoeuvre car le verrouillage est obtenu par simple relâchement de la palette 82 et sans qu'aucun effort supplémentaire ne soit nécessaire.

Avantageusement, on procède selon une quatrième sous-étape (a4) à la commande des moyens de décollement de la coquille 20 par rapport au porte-coquille 22.

D'une manière générale, la sous-étape (a4) est mise en oeuvre après libération de chaque demi-moule et consiste à commander des moyens de décollement pour provoquer le décollement de chaque demi-moule par rapport au porte-moule.

Avantageusement, la quatrième sous-étape (a4) est réalisée simultanément à la mise en oeuvre de la sous-étape (a2) par l'actionneur qui est commandé de manière à solliciter chaque organe d'actionnement 42 avec un effort de libération propre à faire parcourir à chacun d'eux la surcourse au-delà de la position de libération afin de provoquer simultanément le décollement.

Comme représenté à la figure 10 par la suppression du trait fort, après l'étape (a), les coquilles 20 présentes à l'intérieur du dispositif de moulage 10 ne sont plus fixées aux porte-coquilles 22 pas plus que, le cas échéant, le fond de moule 34 à la sellette de sorte que les coquilles 20 jointes enserrant entre elles le fond de moule 34 constituent avantageusement un sous-ensemble unitaire.

Toutefois, les coquilles 20 sont alors maintenues jointes uniquement par les porte-moules 14 qui entourent en position fermée ledit sous-ensemble unitaire.

C'est la raison pour laquelle, le moule 12 comporte avantageusement au moins une partie 120 qui fait saillie hors du dispositif de moulage 10.

Avantageusement, les coquilles 20 du moule 12 comportent une partie sommitale saillante 120 qui s'étend verticalement au dessus de la rainure 32 dans laquelle est reçu le bord 38 du porte-coquille 22.

A titre d'exemple non limitatif, le moule 12 représenté aux figures 2 et 3 comporte avantageusement une telle partie sommitale saillante 120 apte à permettre la préhension comme l'immobilisation des pièces du sous-ensemble unitaire.

La partie sommitale saillante 120 des coquilles 20 est destinée à permettre la mise en place de moyens d'assemblage, aptes ou non à assurer une fonction de support, pour joindre ensemble les demi-moules et former ledit sous-ensemble unitaire transportable qui est constitué par les coquilles 20 emprisonnant le fond de moule 34.

Grâce à la partie sommitale, il est notamment possible de joindre les coquilles 20 ensemble depuis l'extérieur du dispositif de moulage 10 alors que les porte-moules 14 sont en position fermée.

Ainsi, selon la deuxième étape (b) du procédé selon l'invention consiste à joindre ensemble les demi-moules par des moyens d'assemblage de manière à former un sous-ensemble unitaire transportable alors que les porte-moules occupent la position fermée.

En effet, chaque coquille 20 étant libre par rapport au porte-coquille 22 depuis la mise en oeuvre de l'étape (a), il existe un risque de chute de ces dernières lors de l'ouverture des porte-moules 14.

Selon un exemple de réalisation particulièrement simple et économique, les moyens d'assemblage sont constitués par un lien qui est disposé par l'opérateur au niveau de la partie sommitale 120 du moule 12 qui fait saillie hors du porte-coquille 14 de manière à immobiliser les coquilles 20 dans ladite position jointe et constituer le sous-ensemble unitaire.

Les moyens d'assemblage sont destinés à retenir ensemble les demi-moules afin de constituer ledit sous-ensemble unitaire transportable formant un bloc compact apte à être déplacé.

Lorsque le moule 12 comporte un fond de moule 34, celui-ci est maintenu automatiquement en place par coopération de formes avec les coquilles 20 qui, l'entourant, l'enserrent circonférentiellement.

De nombreux dispositifs pour maintenir et/ou supporter le sous-ensemble unitaire sont envisageables, notamment des dispositifs de type mécanique.

En variante, le moule 12 comporte un dispositif de blocage temporaire apte à maintenir accolées les coquilles pour constituer le sous-ensemble unitaire. Avantageusement, le dispositif de blocage comporte des moyens de blocage qui sont montés mobiles entre une position escamotée et une position de blocage.

De plus, les moyens de blocage sont avantageusement commandés en déplacement entre lesdites positions par un élément de commande, par exemple un élément lié à l'organe d'actionnement 42 des moyens de fixation 40 de manière à mettre à profit le coulissement dudit organe 42 vers sa position de libération pour procéder immédiatement après à l'immobilisation des coquilles 20.

Le blocage des coquilles 20 est par exemple réalisé en utilisant les pions 54 présents sur chacune des coquilles 20.

Selon une autre variante, des moyens de préhension tels qu'une pince sont mis en place autour de la partie sommitale 120 et sont aptes à assurer tant la fonction d'assemblage des coquilles ensemble pour former ledit sous-ensemble unitaire que la fonction de support d'un tel sous-ensemble unitaire, lesdits moyens de préhension étant actionnés par l'opérateur ou automatisés et reliés à une structure porteuse.

Avantageusement, l'étape (b) est susceptible d'être mise en oeuvre indifféremment avant ou après l'étape (a).

Quels que soient les moyens d'assemblage choisis, ils assurent de préférence également la fonction de support de manière à faciliter le transport du sous-ensemble unitaire.

La jonction des coquilles pour former ledit sous-ensemble unitaire est représentée sur la figure 10 par un trait fort s'étendant suivant le plan de joint.

La troisième étape (c) consiste à ouvrir les porte-moules depuis la position fermée jusqu'à la position ouverte pour en extraire, suivant un mouvement de translation, ledit sous-ensemble unitaire et de manière que ledit sous-ensemble unitaire demeure dans une position de référence, on procède à l'ouverture des porte-moules 14.

De préférence, lors de l'ouverture des porte-moules depuis la position fermée jusqu'à la position ouverte, le sous-ensemble unitaire précédemment constitué est extrait "automatiquement" et demeure statique, seuls les porte-moules 14 se déplaçant pour s'écarter transversalement l'un de l'autre.

Lorsque que des moyens d'assemblage seuls (sans fonction de support) sont mis en place à l'étape (b), le sous-ensemble unitaire est supporté par l'intermédiaire de son fond 34 en position de référence, notamment par l'intermédiaire d'une sellette.

Avantageusement, les moyens d'assemblage sont constitués par les moyens de préhension (non représentés) précités, à savoir une pince dont les mors sont aptes à serrer la partie sommitale 120 du sous-ensemble unitaire, laquelle pince assure alors également la fonction de support du sous-ensemble unitaire transportable.

Grâce à la coopération des moyens de préhension associés à la partie sommitale 120, il est dès lors possible de procéder à l'ouverture des porte-moules 14 du dispositif de moulage 10 sans risque de chute du sous-ensemble unitaire.

Tel qu'illustré sur la figure 10 par une flèche, la quatrième étape (d) consiste à enlever le sous-ensemble unitaire d'entre les porte-moules à partir de sa position de référence.

De préférence, on s'assure préalablement à l'extraction du déverrouillage du fond de moule 34 par rapport à la sellette de support et au débranchement des raccords fluidiques.

Comme indiqué précédemment, le sous-ensemble unitaire est avantageusement intégralement supporté par les moyens de préhension auxquels le sous-ensemble est suspendu.

Bien entendu, les moyens de préhension sont également susceptibles d'être formés directement par les mains d'un opérateur se saisissant du sous-ensemble unitaire, constitués grâce à des moyens d'assemblage, pour l'extraire depuis la position de référence, ici centrale.

L'extraction du sous-ensemble unitaire est automatisée et réalisée au moyen d'un robot comportant au moins un bras muni de moyens de préhension.

La phase de démontage du moule 12 selon le procédé est alors achevée, le dispositif de moulage est en position ouverte en attente du montage d'un autre sous-ensemble unitaire.

Comme on peut le voir sur la figure 10, l'absence de sous-ensemble unitaire symbolisé par un trait pointillé.

Tel que représenté à la figure 11, une phase de montage d'un sous-ensemble unitaire succède alors à la phase de démontage précitée. Pour ce faire, on procède à la mise en oeuvre des étapes suivantes.

Pour la phase de montage, une cinquième étape (e) consiste à mettre en place un sous-ensemble unitaire dans ladite position de référence entre les porte-moules en position ouverte.

Les porte-moules 14 étant en position ouverte, un sous-ensemble unitaire est introduit suivant la flèche en position de référence.

Comme représenté sur la figure 11, un sous-ensemble unitaire (symbolisé par la présence du trait fort suivant le plan de joint) est introduit, suivant ladite flèche, entre les porte-moules 14 en position ouverte jusqu'à atteindre la position de référence.

De préférence et selon l'exemple de réalisation du dispositif de moulage 10, on procède au montage du fond 34 sur la sellette et le cas échéant aux raccordements fluidiques requis.

Le sous-ensemble unitaire est alors supporté par la sellette et les coquilles 20 maintenues par les moyens d'assemblage ou de préhension.

Puis, selon une sixième étape (f), on referme les porte-moules sur le sous-ensemble unitaire.

Dès lors que les porte-moules 14 se referment sur le sous-ensemble unitaire précédemment disposé en position de référence, il est possible d'ôter les moyens d'assemblage.

La septième étape (g) consiste à enlever les moyens d'assemblage du sous-ensemble unitaire pour autoriser la séparation les demi-moules.

Cela est illustré sur la figure 11 par la suppression des flèches latérales et la suppression du trait fort entre les deux demi-moules qui ne forment plus ledit sous-ensemble unitaire transportable.

La huitième étape (h) consiste à commander les moyens de fixation pour fixer chaque demi-moule au porte-moule associé.

Avec des moyens de fixation 40 selon le premier mode de réalisation, la fixation est obtenue par la mise en oeuvre de sous-étape similaires à celles décrites précédemment pour l'étape (a) de la phase de démontage.

Selon une sous-étape (h1), on commande le déverrouillage du système de verrouillage 62.

Avantageusement, la fixation des coquilles 20 dans les porte-coquilles 22 est obtenue automatiquement du fait du rappel des organes d'actionnement 42 vers la position de fixation de sorte qu'aucune sous-étape spécifique n'est requise.

En l'absence de ressort de rappel de l'organe d'actionnement 42, on commande selon une sous-étape (h2) le dispositif de commande 48 pour déplacer l'organe d'actionnement de la position de libération vers la position de fixation, par exemple au moyen de l'actionneur formant le dispositif de commande 48.

Une fois la position de fixation atteinte (figure 5), on commande le système de verrouillage 62 pour verrouiller en position de fixation ledit organe d'actionnement 42 des moyens de fixation 40.

Comme le système de verrouillage 62 comporte un ressort de rappel du loquet 72 en position de verrouillage de la position de fixation des organes d'actionnement 42 des moyens de fixation 40, aucune sous-étape particulière n'est requise et le verrouillage est obtenu automatiquement.

En variante, en l'absence d'un tel moyen de rappel du loquet 72 vers la position verrouillée, on commande selon une sous-étape (h3) le système de verrouillage 62 pour procéder au verrouillage de l'organe d'actionnement par le loquet 72.

Avantageusement, on commande alors si nécessaire le verrou 18 pour verrouiller les porte-moules 14 en position de fermeture.

Avantageusement, le procédé de changement de moule selon l'invention permet de réduire de manière très importante le temps nécessaire au démontage et au montage par comparaison aux solutions connues de l'état de la technique.

En effet, le sous-ensemble unitaire formé des coquilles 20 et le cas échéant du fond de moule 34, est susceptible d'être monté ou démonté en une seule opération et non plus suivant des opérations successives de saisie puis dépose pour chacune des pièces.

Un tel procédé de changement de moule est rendu possible grâce aux moyens de fixation selon l'invention qui permettent de réaliser la libération comme la fixation du sous-ensemble unitaire de manière particulièrement simple et rapide.

Selon un mode opératoire particulièrement avantageux, l'intervention de l'opérateur est réduite voire supprimée et les moyens de support, tels qu'une pince commandée en ouverture et fermeture assurant avantageusement également la fonction de maintien du sous-ensemble unitaire, sont reliés à un dispositif de transport.

Avantageusement, un tel dispositif de transport est apte à transporter, après la phase de démontage, le sous-ensemble unitaire jusqu'à un magasin de stockage alors que d'autres moyens de support sont avantageusement en attente avec un nouveau sous-ensemble unitaire pour réaliser sans attendre son montage sur le dispositif de moulage 10 suivant les étapes correspondant à la phase de montage.

Bien entendu, dans le procédé qui vient d'être décrit, pour pouvoir procéder à l'ouverture comme à la fermeture du dispositif de moulage 10, on actionne préalablement ou simultanément le verrou 18 de fermeture des porte-moules 14 vers sa position déverrouillée ou verrouillée afin de pouvoir écarter les porte-moules 14 l'un de l'autre, le déverrouillage et l'ouverture étant notamment réalisés manuellement par l'opérateur.

A cet effet, après avoir exercé manuellement un effort sur la came de commande du verrou 18, l'opérateur exerce un effort transversal, toujours manuellement, pour écarter les porte-moules 14 et provoquer l'ouverture jusqu'à atteindre ladite position ouverte.

De préférence, le verrou 18 comporte des moyens de rappel apte à rappeler automatiquement le verrou vers sa position de verrouillage des porte-moules en position fermée.

Avantageusement, le deuxième procédé de changement de moule permet donc de réduire encore le temps nécessaire au démontage par comparaison au premier procédé, de surcroît par comparaison par rapport aux solutions connues de l'état de la technique.

En effet, dans le deuxième procédé, le sous-ensemble unitaire formé des coquilles 20 et le cas échéant du fond de moule 34 est susceptible d'être monté ou démonté en une seule opération et non plus suivant des opérations successives pour chaque coquille 20 notamment.

Un tel procédé de changement de moule est rendu possible grâce aux moyens de fixation selon l'invention grâce auxquels la libération du sous-ensemble unitaire est obtenue de manière particulièrement simple et rapide.

Selon un mode opératoire particulièrement avantageux, l'intervention de l'opérateur est réduite voire supprimée et les moyens de préhension du sous-ensemble unitaire, tels qu'une pince commandée en ouverture et fermeture, sont reliés à un dispositif de transport apte à transporter, après la phase de démontage, un tel sous-ensemble unitaire notamment jusqu'à un magasin de stockage alors que d'autres moyens de préhension sont avantageusement en attente avec le nouveau sous-ensemble unitaire de moulage pour réaliser sans attendre son montage sur le dispositif de moulage 10 suivant les étapes correspondant à la phase de montage.

Bien entendu, le mode de réalisation du dispositif de fixation pour un dispositif de moulage décrit précédemment et représentés aux figures 1 à 9 ne constitue qu'un exemple de réalisation de dispositif de fixation apte à la mise en oeuvre du procédé de changement d'un moule selon l'invention.

La demande de brevet français N°09.56074 au nom de la demanderesse, déposée le 07.09.2009, décrit et représente un autre dispositif de fixation pour un dispositif de moulage comportant des moyens de fixation aptes à la mise en oeuvre du procédé de changement d'un moule selon l'invention.

A titre de variante de réalisation, on décrira maintenant succinctement un tel dispositif de fixation (non représenté) apte à permettre également la mise en oeuvre du procédé de changement de moule selon l'invention et pour de plus amples détails, on se reportera à la demande de brevet français précitée.

Conformément à l'invention, les moyens de fixation dudit dispositif de fixation de chaque demi-moule au porte-moule se caractérisent par le fait qu'ils sont aptes à être commandés sélectivement pour fixer ou libérer chaque demi-moule lorsque les porte-moules sont en position fermée.

Plus précisément, les moyens de fixation sont aptes à exercer sélectivement une force d'attraction sur chaque demi-moule pour le fixer au porte-moule associé.

Avantageusement, les moyens de fixation exerçant ladite force d'attraction sont des moyens à dépression aptes à assurer la fixation des demi-moules par effet ventouse.

Pour ce faire, les moyens de fixation comportent au moins une chambre étanche à l'air, réservée à l'interface entre le porte-moule et le demi-moule, qui est associée à des moyens d'aspiration comportant au moins une source commandée de dépression.

Avantageusement, la chambre étanche communique avec ladite une source commandée de dépression par l'intermédiaire d'une conduite d'aspiration de manière à mettre la chambre étanche à une pression de fixation qui est inférieure à la pression atmosphérique.

La chambre étanche est destinée à être soumise à une pression dite de fixation qui est inférieure à la pression atmosphérique afin de maintenir le demi-moule plaqué par effet de ventouse contre le fond du logement du porte-moule.

Lorsque le demi-moule est en position montée, sa face externe entre en contact avec le fond du logement, fermant ainsi transversalement la cavité pour former la chambre étanche.

La cavité est avantageusement peu profonde afin que la chambre étanche présente un volume réduit. En effet, l'intensité de la force d'attraction par aspiration exercée par le vide est proportionnelle à l'aire délimitée par le contour de la chambre étanche.

L'étanchéité de la chambre étanche est réalisée par un joint continu qui entoure extérieurement le contour de la cavité présentant par exemple une forme parallélépipédique.

De préférence, le joint est porté par le porte-moule et est reçu dans une gorge annulaire qui est réalisée dans le fond du logement du porte-moule. Le joint d'étanchéité est destiné à être comprimé entre la face externe du demi-moule et le fond du logement pour conférer son étanchéité à la chambre étanche.

Avantageusement, la chambre étanche communique avec une source commandée de dépression par l'intermédiaire d'une conduite d'aspiration pour permettre la mise en pression de la chambre étanche à une pression inférieure à la pression atmosphérique.

La source de dépression est susceptible d'être commandée sélectivement entre un état activé dans lequel les moyens de fixation sont actifs et un état désactivé dans lequel les moyens de fixation sont inactifs.

Par comparaison avec le mode de réalisation précédent, l'état activé correspond à la position de fixation tandis que l'état désactivé correspond à la position de libération.

De préférence, la conduite d'aspiration est réalisée dans l'épaisseur du porte-moule et s'étend depuis un orifice de raccordement jusqu'à la source qui est agencé à la base inférieure du porte-moule et jusqu'à un orifice qui débouche dans la chambre étanche.

L'orifice de raccordement comporte un moyen de connexion qui est destiné à être raccordé avec la source de dépression par l'intermédiaire d'une conduite flexible.

La conduite flexible permet d'implanter la source de dépression sur un support fixe par rapport au carrousel, par exemples la console, tandis que le porte-moule est mobile.

La source de dépression est par exemple formée par une pompe à effet Venturi telle qu'une pompe comportant un tube de Venturi présentant un rétrécissement de section en son milieu. Le tube de Venturi est traversé par un débit d'air comprimé qui crée une dépression dans le rétrécissement.

La conduite d'aspiration est raccordée au tube de Venturi au niveau du rétrécissement pour permettre l'aspiration de l'air contenu dans la chambre étanche.

On décrira maintenant le procédé de changement du moule d'un dispositif de moulage équipé d'un dispositif de fixation selon le deuxième mode de réalisation qui vient d'être décrit.

Pour réaliser la phase de démontage, le procédé comporte au moins une première étape (a) consistant à commander les moyens de fixation pour libérer chaque demi-moule alors que les porte-moules occupent la position fermée.

Pour démonter les demi-moules, la chambre étanche est mise à pression atmosphérique, par exemple en désactivant la source de dépression et en ouvrant la vanne de commande.

La source de dépression est donc commandée de son état activé dans lequel les moyens de fixation sont actifs et un état désactivé dans lequel les moyens de fixation sont inactifs et chaque demi-moule libéré.

Pour des raisons analogues à celles détaillées précédemment pour le premier mode de réalisation, on procède ensuite dans la deuxième étape (b) consistant à joindre ensemble les demi-moules par des moyens d'assemblage de manière à former un sous-ensemble unitaire transportable alors que les porte-moules occupent la position fermée.

De préférence, les moyens d'immobilisation sont constitués par un lien disposé autour de la partie sommitale, ou en variante par une pince et cela avant qu'il soit procédé à l'ouverture des porte-moules.

Avantageusement, il est encore prévu des moyens de support destinés à supporter le sous-ensemble unitaire transportable, formé à la faveur des moyens d'assemblage, de manière à éviter la chute dudit sous-ensemble lors de l'ouverture des porte-moules.

De préférence, la fonction d'assemblage et la fonction de support du sous-ensemble unitaire transportable sont réalisées par les mêmes moyens tels qu'une pince assurant la préhension du sous-ensemble unitaire par la partie sommitale faisant saillie hors du dispositif de moulage lorsque les porte-moules sont en position fermée.

On procède alors à la mise en oeuvre d'une troisième étape (c) consistant à ouvrir les porte-moules depuis la position fermée jusqu'à la position ouverte pour en extraire, suivant un mouvement de translation, ledit sous-ensemble unitaire et de manière que ledit sous-ensemble unitaire demeure dans une position de référence.

Lorsque le sous-ensemble n'est plus relié au dispositif de moulage, par exemple via le fond de moule solidaire de la sellette, une quatrième étape (d) consiste à enlever le sous-ensemble unitaire d'entre les porte-moules à partir de sa position de référence.

Avantageusement, le fonctionnement de la source de dépression est susceptible d'être inversé afin de permettre la mise de la chambre étanche à une pression supérieure à la pression atmosphérique.

En effet, lorsque le demi-moule est resté plaqué plusieurs heures contre le fond du logement, on a constaté que le demi-moule adhère fréquemment au porte-moule. Cette adhérence est susceptible de ralentir l'opération de démontage du demi-moule.

Pour inverser le fonctionnement de la pompe à effet Venturi, il est par exemple possible de souffler directement dans la conduite d'aspiration l'air comprimé qui alimente normalement le tube de Venturi, notamment à l'aide d'une vanne trois voies.

Le fait d'inverser le fonctionnement de la pompe à vide permet de créer une surpression dans la chambre étanche propre à provoquer le décollement du demi-moule.

Une telle étape de décollement est avantageusement mise en oeuvre après la libération des demi-moules et avant l'ouverture selon l'étape (c).

A l'issue de la phase de démontage, on procède à la phase de montage d'un nouveau sous-ensemble unitaire transportable suivant au moins les étapes suivantes :
(e) mettre en place un sous-ensemble unitaire dans ladite position de référence entre les porte-moules en position ouverte,
(f) refermer des porte-moules sur le sous-ensemble unitaire,
(g) enlever les moyens d'assemblage du sous-ensemble unitaire transportable pour autoriser la séparation les demi-moules,
(h) commander les moyens de fixation pour fixer chaque demi-moule au porte-moule associé.

Dans la position de référence et après fermeture des porte-moules sur le sous-ensemble unitaire, la face externe du demi-moule coopère avec le fond du logement pour fermer la cavité afin de former la chambre étanche. Le joint du logement est comprimé par le demi-moule pour assurer l'étanchéité de la chambre étanche.

Puis, la pompe à effet Venturi est activée. La pompe à effet Venturi aspire alors l'air présent dans la chambre étanche, provoquant ainsi un effet de ventouse qui permet de plaquer la face externe du demi-moule contre le fond du logement.

Ce plaquage permet de comprimer encore plus le joint et d'augmenter ainsi l'étanchéité de la chambre étanche.

Les dimensions de la chambre étanche et la pression régnant dans la chambre étanche lors du fonctionnement de la pompe à effet Venturi sont conçues de manière que la force d'attraction exercée par la dépression de la chambre étanche soit suffisante pour maintenir le demi-moule fixé pendant le fonctionnement du dispositif de soufflage, y compris lors des ouvertures et fermetures rapides et répétées des porte-moules pour éjecter les récipients formés par soufflage.

La pompe à effet Venturi comporte avantageusement des moyens de mesure de la pression régnant dans la chambre étanche et une vanne de commande pour fermer de manière étanche la conduite d'aspiration. La vanne de commande est interposée entre les moyens de mesure de la pression.

De préférence, le dispositif de fixation comporte une unité électronique de commande qui permet de commander la fermeture de la vanne de commande ainsi que l'alimentation en air comprimé du tube de Venturi.

Les moyens de mesure de la pression sont susceptibles de communiquer la pression mesurée à l'unité électronique de commande.

Lorsque la pression mesurée est inférieure ou égale à la pression de fixation, l'unité électronique commande la fermeture de la vanne de commande et elle coupe l'alimentation en air comprimé du tube de Venturi.

Ainsi, la chambre étanche est maintenue à sa pression de fixation sans source d'énergie extérieure. La valeur de la pression dans la chambre étanche est cependant susceptible de varier, par exemple du fait de légères fuites d'air.

Lorsque la valeur de la pression régnant dans la chambre étanche est mesurée comme étant supérieure à une valeur de seuil déterminée par rapport à une valeur limite de pression au-delà de laquelle la fixation est perfectible, l'unité électronique de commande commande alors la réactivation de l'alimentation en air comprimé du tube de Venturi ainsi que l'ouverture de la vanne de commande afin d'aspirer l'air contenu dans la chambre étanche.

Selon une autre variante de réalisation de l'invention, le demi-moule est fixé sur le porte-moule par attraction magnétique.

Dans le procédé de changement de moule décrit précédemment et illustré par les figures 10 et 11, la position de référence est une position centrale entre les porte-moules, les demi-moules étant libérés, simultanément ou non, avant l'étape d'ouverture du porte-moule.

En variante, la position de référence est une position latérale et les moyens de fixation commandés successivement.

Pour le démontage à partir de porte-moules occupant la position fermée, le procédé consiste alors à mettre en place des moyens d'assemblage (s'ils ne sont pas intégrés) et cela afin de constituer le sous-ensemble unitaire, à libérer le fond de moule de la sellette, à libérer uniquement l'un des demi-moules, à ouvrir les porte-moules.

Le sous-ensemble unitaire est alors supporté par celui des porte-moules dont les moyens de fixation n'ont pas été commandés vers l'état de libération.

Pour enlever le sous-ensemble unitaire qui occupe alors une position latérale de référence, on commande les moyens de fixation pour libérer le demi-moule du sous-ensemble encore fixé, de préférence avec l'assistance de moyens de décollement, et le sous-ensemble est alors extrait.

L'extraction du sous-ensemble est par exemple réalisée manuellement par un opérateur, soit directement au moyen de ses mains, soit avec l'assistance de moyens de préhension tels qu'une pince propre à assurer le support du sous-ensemble lors de sa libération (voir également l'assemblage des demi-moules formant ledit sous-ensemble en l'absence de moyens d'assemblage mis en place préalablement à la libération).

L'extraction du sous-ensemble unitaire est également susceptible d'être réalisée automatiquement, sans l'intervention d'un opérateur, notamment par l'intermédiaire d'un robot manipulateur comportant à l'extrémité d'un bras articulé des moyens de préhension aptes se saisir du sous-ensemble et à le transporter ensuite, une fois sa libération intervenue.

## Revendications

1. Procédé de changement d'un moule d'un dispositif de moulage (10) pour la fabrication de récipients en matière thermoplastique par formage d'une préforme préalablement chauffée, notamment de bouteilles, le dispositif de moulage (10) comportant deux porte-moules (14) montés mobiles l'un par rapport à l'autre autour d'un axe (O) de rotation entre une position ouverte et une position fermée et deux demi-moules (20) fixés chacun de manière démontable à un porte-moule (14) associé par des moyens de fixation (40),
**caractérisé en ce que** ledit procédé de changement de moule comporte pour démonter un moule au moins les étapes consistant à :
(a) commander les moyens de fixation pour libérer chaque demi-moule (20) alors que les porte-moules occupent la position fermée,
(b) joindre ensemble les demi-moules (20) par des moyens d'assemblage de manière à former un sous-ensemble unitaire transportable alors que les porte-moules occupent la position fermée,
(c) ouvrir les porte-moules depuis la position fermée jusqu'à la position ouverte pour en extraire, suivant un mouvement de translation, ledit sous-ensemble unitaire et de manière que ledit sous-ensemble unitaire demeure dans une position de référence,
(d) enlever le sous-ensemble unitaire d'entre les porte-moules à partir de sa position de référence au moyen d'un robot comportant au moins un bras muni de moyens de préhension.

2. Procédé selon la revendication 1, **caractérisé en ce que** le procédé comporte, pour la mise en oeuvre de l'étape (a), au moins une sous-étape (a1) consistant à commander le déverrouillage d'au moins un organe d'actionnement des moyens de fixation occupant une position de fixation pour libérer ledit organe d'actionnement.

3. Procédé selon l'une des revendications 1 ou 2, **caractérisé en ce que** le procédé comporte, pour la mise en oeuvre de l'étape (a), au moins une sous-étape (a2) consistant à commander un dispositif de commande pour déplacer en coulissement un organe d'actionnement des moyens de fixation depuis une position de fixation jusqu'à une position de libération.

4. Procédé selon l'une quelconque des revendications 1 à 3, **caractérisé en ce que** le procédé comporte, pour la mise en oeuvre de l'étape (a), au moins une sous-étape (a3) consistant à commander le verrouillage d'au moins un organe d'actionnement des moyens de fixation occupant une position de libération pour maintenir ledit organe d'actionnement en position de libération.

5. Procédé selon l'une quelconque des revendications 1 à 4, **caractérisé en ce que** le procédé comporte, pour la mise en oeuvre de l'étape (a), au moins une sous-étape (a4) mise en oeuvre après libération de chaque demi-moule et consistant à commander des moyens de décollement pour provoquer le décollement de chaque demi-moule par rapport au porte-moule.

6. Procédé selon l'une quelconque des revendications précédentes, **caractérisé en ce que** le procédé comporte au moins les étapes suivantes pour monter un autre moule :
(e) mettre en place un sous-ensemble unitaire dans ladite position de référence entre les porte-moules en position ouverte,
(f) refermer des porte-moules sur le sous-ensemble unitaire,
(g) enlever les moyens d'assemblage du sous-ensemble unitaire pour autoriser la séparation les demi-moules (20),
(h) commander les moyens de fixation pour fixer chaque demi-moule (20) au porte-moule associé.

7. Procédé selon l'une quelconque des revendications 1 à 5 et selon la revendication 6, **caractérisé en ce que** le procédé comporte une étape supplémentaire mise en oeuvre avant l'étape (c) et après l'étape (e) consistant à :
- commander des moyens de support aptes à retenir en position de référence ledit sous-ensemble unitaire.

8. Procédé selon la revendication 6, **caractérisé en ce que** le procédé comporte, pour la mise en oeuvre de l'étape (h), au moins une sous-étape (h1) consistant à commander le déverrouillage d'au moins un organe d'actionnement des moyens de fixation occupant la position de libération pour libérer ledit organe d'actionnement.

9. Procédé selon la revendication 6 ou 7, **caractérisé en ce que** le procédé comporte, pour la mise en oeuvre de l'étape (h), au moins une sous-étape (h2) consistant à commander un dispositif de commande pour déplacer en coulissement un organe d'actionnement des moyens de fixation depuis une position de fixation jusqu'à une position de libération.

10. Procédé selon l'une des revendications 8 ou 9, **caractérisé en ce que** le procédé comporte, pour la mise en oeuvre de l'étape (h), au moins une sous-étape (h3) consistant à commander le verrouillage d'au moins un organe d'actionnement des moyens de fixation occupant une position de fixation pour maintenir ledit organe d'actionnement en position de fixation.

11. Dispositif de moulage (10) pour la mise en oeuvre du procédé de changement de moule selon l'une quelconque des revendications 1 à 10 précédentes, le dispositif de moulage (10) comportant deux porte-moules (14) montés mobiles l'un par rapport à l'autre autour d'un axe (O) de rotation entre une position ouverte et une position fermée et deux demi-moules (20) fixés chacun de manière démontable à un porte-moule (14) associé par des moyens de fixation (40), , **caractérisé en ce que** lesdits moyens de fixation (40) de chaque demi-moule (20) au porte-moule sont aptes à être commandés sélectivement pour fixer ou libérer chaque demi-moule (20) lorsque les porte-moules (14) sont en position fermée, **en ce que** le dispositif de moulage est apte à coopérer avec des moyens d'assemblage joignant ensemble les demi-moules (20) de manière à former un sous-ensemble unitaire transportable alors que les porte-moules occupent la position fermée, et **en ce que** les moyens de fixation (40) sont aptes à autoriser une introduction ou une extraction du sous-ensemble unitaire suivant un mouvement de translation, au moyen d'un robot comportant au moins un bras muni de moyens de préhension.

12. Dispositif de moulage (10) selon la revendication 11, **caractérisé en ce que** les moyens de fixation (40) comportent au moins un organe d'actionnement (42) des moyens de fixation (40) qui est apte à être commandé en déplacement entre au moins une position de fixation et une position de libération depuis l'extérieur du dispositif de moulage (10) alors que les porte-moules (14) sont en position fermée.

13. Dispositif de moulage (10) selon la revendication 12, **caractérisé en ce que** l'organe d'actionnement (42) des moyens de fixation (40) est commandé en translation de manière à coulisser entre lesdites positions de fixation et de libération.

14. Dispositif de moulage (10) selon la revendication 11, **caractérisé en ce que** les moyens de fixation (40) commandés sélectivement sont aptes à exercer une force d'attraction sur chaque demi-moule pour le fixer au porte-moule associé.

15. Dispositif de moulage (10) selon la revendication 14, **caractérisé en ce que** les moyens de fixation (40) exerçant ladite force d'attraction sont des moyens à dépression aptes à assurer la fixation des demi-moules par effet ventouse.

16. Système pour le changement d'un moule d'un dispositif de moulage (10) et pour la mise en oeuvre du procédé de changement de moule selon l'une quelconque des revendications 1 à 10 précédentes, le système comprenant ledit dispositif de moulage comportant deux porte-moules (14) montés mobiles l'un par rapport à l'autre autour d'un axe (O) de rotation entre une position ouverte et une position fermée et deux demi-moules (20) fixés chacun de manière démontable à un porte-moule (14) associé par des moyens de fixation (40), **caractérisé en ce que** les moyens de fixation sont aptes à être commandés sélectivement pour fixer ou libérer chaque demi-moule (20) alors que les porte-moules occupent la position fermée, et **en ce que** le système comprend :
- des moyens d'assemblage conçus pour joindre ensemble les demi-moules (20) de manière à former un sous-ensemble unitaire transportable alors que les porte-moules occupent la position fermée, et
- un robot comportant au moins un bras muni de moyens de préhension aptes à se saisir du sous-ensemble unitaire et à transporter ledit sous-ensemble.

17. Système selon la revendication 16, **caractérisé en ce que** les moyens de préhension constituent lesdits moyens d'assemblage, les moyens de préhension réalisant la fonction d'assemblage et la fonction de support du sous-ensemble unitaire transportable.

18. Système selon la revendication 16, **caractérisé en ce que** les moyens de préhension coopèrent avec une partie (120) du moule qui fait saillie hors du dispositif de moulage (10).

19. Système selon la revendication 16, **caractérisé en ce que** les moyens de préhension sont constitués par une pince comportant des mors aptes à serrer ladite partie (120) du moule.

20. Système selon la revendication 16, **caractérisé en ce que** les moyens de préhension sont constitués par une pince commandée en ouverture et fermeture.

21. Système selon la revendication 16, **caractérisé en ce que** le système comporte des moyens pour réaliser automatiquement une étape consistant à enlever le sous-ensemble unitaire d'entre les porte-moules à partir de sa position de référence et une étape consistant à mettre en place un sous-ensemble unitaire dans ladite position de référence entre les porte-moules en position ouverte.

22. Système selon la revendication 16, **caractérisé en ce que** le système comporte d'autres moyens de préhension qui sont en attente avec un nouveau sous-ensemble unitaire de moulage pour réaliser sans attendre, après une phase de démontage le montage dudit nouveau sous-ensemble unitaire de moulage sur le dispositif de moulage (10).

## Patentansprüche

1. Verfahren zum Wechseln eines Formwerkzeugs einer Formgebungsvorrichtung (10) zur Herstellung von Behältern aus thermoplastischem Material durch Formen einer vorab erwärmten Vorform, insbesondere von Flaschen, wobei die Formgebungsvorrichtung (10) zwei Formwerkzeugträger (14), die zwischen einer offenen Stellung und einer geschlossenen Stellung um eine Drehachse (0) zueinander beweglich montiert sind, und zwei Halbformen (20) aufweist, die je durch Befestigungseinrichtungen (40) ausbaubar an einem zugeordneten Formwerkzeugträger (14) befestigt sind,
**dadurch gekennzeichnet, dass** das Verfahren zum Wechseln eines Formwerkzeugs für den Ausbau eines Formwerkzeugs mindesten die Schritte aufweist, die darin bestehen:
(a)die Befestigungseinrichtungen zu steuern, um jede Halbform (20) freizugeben, während die Formwerkzeugträger die geschlossene Stellung einnehmen,
(b)Miteinander Verbinden der Halbformen (20) durch Zusammenbaueinrichtungen, um eine transportierbare einheitliche Baugruppe zu bilden, während die Formwerkzeugträger die geschlossene Stellung einnehmen,
(c)Öffnen der Formwerkzeugträger aus der geschlossenen Stellung in die offene Stellung, um daraus die einheitliche Baugruppe gemäß einer Translationsbewegung und so zu entnehmen, dass die einheitliche Baugruppe in einer Bezugsstellung bleibt,
(d)Entfernen der einheitlichen Baugruppe aus den Formwerkzeugträgern ausgehend von ihrer Bezugsstellung mittels eines Roboters, der mindestens einen mit Greifeinrichtungen versehenen Arm aufweist.

2. Verfahren nach Anspruch 1, **dadurch gekennzeichnet, dass** das Verfahren zur Durchführung des Schritts (a) mindestens einen Teilschritt (a1) aufweist, der darin besteht, das Entriegeln mindestens eines Betätigungsorgans der Befestigungseinrichtungen zu steuern, das eine Befestigungsstellung einnimmt, um das Betätigungsorgan freizugeben.

3. Verfahren nach einem der Ansprüche 1 oder 2, **dadurch gekennzeichnet, dass** das Verfahren zur Durchführung des Schritts (a) mindestens einen Teilschritt (a2) aufweist, der darin besteht, eine Steuervorrichtung zu steuern, um ein Betätigungsorgan der Befestigungseinrichtungen von einer Befestigungsstellung bis zu einer Freigabestellung gleitend zu verschieben.

4. Verfahren nach einem der Ansprüche 1 bis 3, **dadurch gekennzeichnet, dass** das Verfahren zur Durchführung des Schritts (a) mindestens einen Teilschritt (a3) aufweist, der darin besteht, die Verriegelung mindestens eines Betätigungsorgans der Befestigungseinrichtungen zu steuern, das eine Freigabestellung einnimmt, um das Betätigungsorgan in der Freigabestellung zu halten.

5. Verfahren nach einem der Ansprüche 1 bis 4, **dadurch gekennzeichnet, dass** das Verfahren zur Durchführung des Schritts (a) mindestens einen Teilschritt (a4) aufweist, der nach Freigabe jeder Halbform durchgeführt wird und darin besteht, Ablöseeinrichtungen zu steuern, um das Ablösen jeder Halbform bezüglich des Formwerkzeugträgers zu bewirken.

6. Verfahren nach einem der vorhergehenden Ansprüche, **dadurch gekennzeichnet, dass** das Verfahren mindestens die folgenden Schritte aufweist, um ein anderes Formwerkzeug zu montieren:
(e)Anordnen einer einheitlichen Baugruppe in der Bezugsstellung zwischen den Formwerkzeugträgern in offener Stellung,
(f)Schließen der Formwerkzeugträger auf der einheitlichen Baugruppe,
(g)Entfernen der Zusammenbaueinrichtungen von der einheitlichen Baugruppe, um die Trennung der Halbformen (20) zu erlauben,
(h)Steuern der Befestigungseinrichtungen, um jede Halbform (20) am zugeordneten Formwerkzeugträger zu befestigen.

7. Verfahren nach einem der Ansprüche 1 bis 5 und nach Anspruch 6, **dadurch gekennzeichnet, dass** das Verfahren einen zusätzlichen Schritt aufweist, der vor dem Schritt (c) und nach dem Schritt (e) durchgeführt wird, der darin besteht:
- Trägereinrichtungen zu steuern, die die einheitliche Baugruppe in der Bezugsstellung halten können.

8. Verfahren nach Anspruch 6, **dadurch gekennzeichnet, dass** das Verfahren zur Durchführung des Schritts (h) mindestens einen Teilschritt (h1) aufweist, der darin besteht, die Entriegelung mindestens eines Betätigungsorgans der Befestigungseinrichtungen zu steuern, das die Freigabestellung einnimmt, um das Betätigungsorgan freizugeben.

9. Verfahren nach Anspruch 6 oder 7, **dadurch gekennzeichnet, dass** das Verfahren zur Durchführung des Schritts (h) mindestens einen Teilschritt (h2) aufweist, der darin besteht, eine Steuervorrichtung zu steuern, um ein Betätigungsorgan der Befestigungseinrichtungen von einer Befestigungsstellung in eine Freigabestellung gleitend zu verschieben.

10. Verfahren nach einem der Ansprüche 8 oder 9, **dadurch gekennzeichnet, dass** das Verfahren zur Durchführung des Schritts (h) mindestens einen Teilschritt (h3) aufweist, der darin besteht, das Verriegeln mindestens eines Betätigungsorgans der Befestigungseinrichtungen zu steuern, das eine Befestigungsstellung einnimmt, um das Betätigungsorgan in der Befestigungsstellung zu halten.

11. Formgebungsvorrichtung (10) zur Durchführung des Verfahrens zum Wechseln eines Formwerkzeugs nach einem der vorhergehenden Ansprüche 1 bis 10, wobei die Formgebungsvorrichtung (10) zwei Formwerkzeugträger (14), die um eine Drehachse (0) zwischen einer offenen Stellung und einer geschlossenen Stellung zueinander beweglich montiert sind, und zwei Halbformen (20) aufweist, die je durch Befestigungseinrichtungen (40) ausbaubar an einem zugeordneten Formwerkzeugträger (14) befestigt sind, **dadurch gekennzeichnet, dass** die Befestigungseinrichtungen (40) jeder Halbform (20) am Formwerkzeugträger selektiv gesteuert werden können, um jede Halbform (20) zu befestigen oder freizugeben, wenn die Formwerkzeugträger (14) in der geschlossenen Stellung sind, dass die Formgebungsvorrichtung mit Zusammenbaueinrichtungen zusammenwirken kann, die die Halbformen (20) miteinander verbinden, um eine transportierbare einheitliche Baugruppe zu bilden, während die Formwerkzeugträger die geschlossene Stellung einnehmen, und dass die Befestigungseinrichtungen (40) ein Einführen oder eine Entnahme der einheitlichen Baugruppe gemäß einer Translationsbewegung mittels eines Roboters erlauben können, der mindestens einen mit Greifeinrichtungen versehenen Arm aufweist.

12. Formgebungsvorrichtung (10) nach Anspruch 11, **dadurch gekennzeichnet, dass** die Befestigungseinrichtungen (40) mindestens ein Betätigungsorgan (42) der Befestigungseinrichtungen (40) aufweisen, dessen Verschiebung zwischen mindestens einer Befestigungsstellung und einer Freigabestellung von außerhalb der Formgebungsvorrichtung (10) gesteuert werden kann, während die Formwerkzeugträger (14) in der geschlossenen Stellung sind.

13. Formgebungsvorrichtung (10) nach Anspruch 12, **dadurch gekennzeichnet, dass** das Betätigungsorgan (42) der Befestigungseinrichtungen (40) in Translationsrichtung gesteuert wird, um zwischen den Befestigungs- und Freigabestellungen zu gleiten.

14. Formgebungsvorrichtung (10) nach Anspruch 11, **dadurch gekennzeichnet, dass** die selektiv gesteuerten Befestigungseinrichtungen (40) eine Anziehungskraft auf jede Halbform ausüben können, um sie am zugeordneten Formwerkzeugträger zu befestigen.

15. Formgebungsvorrichtung (10) nach Anspruch 14, **dadurch gekennzeichnet, dass** die die Anziehungskraft ausübenden Befestigungseinrichtungen (40) Unterdruckeinrichtungen sind, die die Befestigung der Halbformen durch Saugwirkung gewährleisten können.

16. System zum Wechsel eines Formwerkzeugs einer Formgebungsvorrichtung (10) und zur Durchführung des Verfahrens zum Wechsel eines Formwerkzeugs nach einem der vorhergehenden Ansprüche 1 bis 10, wobei das System die Formgebungsvorrichtung enthält, die zwei Formwerkzeugträger (14), die zwischen einer offenen Stellung und einer geschlossenen Stellung um eine Drehachse (0) zueinander beweglich montiert sind, und zwei Halbformen (20) aufweist, die je durch Befestigungseinrichtungen (40) ausbaubar an einem zugeordneten Formwerkzeugträger (14) befestigt sind, **dadurch gekennzeichnet, dass** die Befestigungseinrichtungen selektiv gesteuert werden können, um jede Halbform (20) zu befestigen oder freizugeben, während die Formwerkzeugträger die geschlossene Stellung einnehmen, und dass das System enthält:
- Zusammenbaueinrichtungen, die konzipiert sind, um die Halbformen (20) so miteinander zu verbinden, dass sie eine transportierbare einheitlichen Baugruppe bilden, während die Formwerkzeugträger die geschlossene Stellung einnehmen, und
- einen Roboter, der mindestens einen mit Greifeinrichtungen versehenen Arm aufweist, die die einheitliche Baugruppe ergreifen und transportieren können.

17. System nach Anspruch 16, **dadurch gekennzeichnet, dass** die Greifeinrichtungen die Zusammenbaueinrichtungen bilden, wobei die Greifeinrichtungen die Funktion des Zusammenbaus und die Funktion des Tragens der transportierbaren einheitliche Baugruppe ausüben.

18. System nach Anspruch 16, **dadurch gekennzeichnet, dass** die Greifeinrichtungen mit einem Teil (120) des Formwerkzeugs zusammenwirken, der aus der Formgebungsvorrichtung (10) vorsteht.

19. System nach Anspruch 16, **dadurch gekennzeichnet, dass** die Greifeinrichtungen aus einer Zange bestehen, die Backen aufweist, welche den Teil (120) des Formwerkzeugs einklemmen können.

20. System nach Anspruch 16, **dadurch gekennzeichnet, dass** die Greifeinrichtungen aus einer Zange bestehen, deren Öffnen und Schließen gesteuert wird.

21. System nach Anspruch 16, **dadurch gekennzeichnet, dass** das System Einrichtungen aufweist, um automatisch einen Schritt, der darin besteht, die einheitliche Baugruppe aus den Formwerkzeugträgern ausgehend von ihrer Bezugsstellung zu entfernen, und einen Schritt auszuführen, der darin besteht, eine einheitliche Baugruppe in der Bezugsstellung zwischen den Formwerkzeugträgern in offener Stellung anzuordnen.

22. System nach Anspruch 16, **dadurch gekennzeichnet, dass** das System weitere Greifeinrichtungen aufweist, die mit einer neuen einheitlichen Formgebungs-Baugruppe in Wartestellung sind, um ohne Wartezeit nach einer Ausbauphase den Einbau der neuen einheitlichen Formgebungs-Baugruppe in die Formgebungsvorrichtung (10) auszuführen.

## Claims

1. Method for changing a mould of a moulding apparatus (10) for manufacturing receptacles, in particular bottles, made of thermoplastic material by shaping a pre-heated preform, the moulding apparatus (10) comprising two mould carriers (14) which are mounted so as to be able to move with respect to one another about an axis of rotation (0), between an open position and a closed position, and two half-moulds (20) which are each removably secured to an associated mould carrier (14) by securing means (40),
**characterized in that** said method for changing a mould comprises, for removing a mould, at least the steps of:
(a) controlling the securing means so as to free each half-mould (20) while the mould carriers are in the closed position;
(b) joining together the half-moulds (20) using assembling means so as to form a transportable unitary subassembly while the mould carriers are in the closed position;
(c) opening the mould carriers from the closed position to the open position in order to remove said unitary subassembly therefrom, following a translatory motion, and such that said unitary subassembly remains in a reference position;
(d) removing the unitary subassembly from between the mould carriers, starting at its reference position, by means of a robot comprising at least one arm provided with gripping means.

2. Method according to Claim 1, **characterized in that** the method comprises, for implementing step (a), at least one sub-step (a1) that consists in ordering the unlocking of at least one actuating member of the securing means in a securing position in order to free said actuating member.

3. Method according to Claim 1 or 2, **characterized in that** the method comprises, for implementing step (a), at least one sub-step (a2) that consists in controlling a control device such that an actuating member of the securing means is made to slide from a securing position to a release position.

4. Method according to any one of Claims 1 to 3, **characterized in that** the method comprises, for implementing step (a), at least one sub-step (a3) that consists in ordering the locking of at least one actuating member of the securing means in a release position in order to hold said actuating member in the release position.

5. Method according to any one of Claims 1 to 4, **characterized in that** the method comprises, for implementing step (a), at least one sub-step (a4) that is implemented after the release of each half-mould and consists in controlling the unsticking means in order to cause each half-mould to be unstuck from the mould carrier.

6. Method according to any one of the preceding claims, **characterized in that** the method comprises at least the following steps for mounting another mould:
(e) putting in place a unitary subassembly in said reference position between the mould carriers in the open position;
(f) closing mould carriers on the unitary subassembly;
(g) removing the means for assembling the unitary subassembly so as to allow the half-moulds (20) to separate;
(h) controlling the securing means so as to secure each half-mould (20) to the associated mould carrier.

7. Method according to any one of Claims 1 to 5, and according to Claim 6, **characterized in that** the method comprises an additional step that is implemented prior to step (c) and after step (e) and consists in:
- controlling support means that are able to retain said unitary subassembly in the reference position.

8. Method according to Claim 6, **characterized in that** the method comprises, for implementing step (h), at least one sub-step (h1) that consists in ordering the unlocking of at least one actuating member of the securing means in the release position in order to release said actuating member.

9. Method according to Claim 6 or 7, **characterized in that** the method comprises, for implementing step (h), at least one sub-step (h2) that consists in ordering a control device to make an actuating member of the securing means slide from a securing position to a release position.

10. Method according to either of Claims 8 and 9, **characterized in that** the method comprises, for implementing step (h), at least one sub-step (h3) that consists in ordering the locking of at least one actuating member of the securing means in a securing position in order to hold said actuating member in the securing position.

11. Moulding apparatus (10) for implementing the method for changing a mould according to any one of the preceding Claims 1 to 10, the moulding apparatus (10) comprising two mould carriers (14) which are mounted to as to be able to move with respect to one another about an axis of rotation (0), between an open position and a closed position, and two half-moulds (20) which are each removably secured to an associated mould carrier (14) by securing means (40), **characterized in that** said means (40) for securing each half-mould (20) to the mould carrier are able to be controlled selectively in order to secure or release each half-mould (20) while the mould carriers (14) are in the closed position, **in that** the moulding apparatus is able to cooperate with assembling means joining together the half-moulds (20) so as to form a transportable unitary subassembly while the mould carriers are in the closed position, and **in that** the securing means (40) are able to allow the unitary subassembly to be inserted or removed following a translatory motion, by means of a robot comprising at least one arm provided with gripping means.

12. Moulding apparatus (10) according to Claim 11, **characterized in that** the securing means (40) comprise at least one actuating member (42), of the securing means (40), which is able to be ordered to move between at least one securing position and one release position from outside the moulding apparatus (10) while the mould carriers (14) are in the closed position.

13. Moulding apparatus (10) according to Claim 12, **characterized in that** the actuating member (42) of the securing means (40) is ordered to translate so as to slide between said securing and release positions.

14. Moulding apparatus (10) according to Claim 11, **characterized in that** the securing means (40), controlled selectively, are able to exert an attractive force on each half-mould in order to secure it to the associated mould carrier.

15. Moulding apparatus (10) according to Claim 14, **characterized in that** the securing means (40) exerting said attractive force are vacuum means that are able to secure the half-moulds by means of a suction effect.

16. System for changing a mould of a moulding apparatus (10) and for implementing the mould changing method according to any one of the preceding Claims 1 to 10, the system comprising said moulding apparatus comprising two mould carriers (14) which are mounted to as to be able to move with respect to one another about an axis of rotation (0), between an open position and a closed position, and two half-moulds (20) which are each removably secured to an associated mould carrier (14) by securing means (40), **characterized in that** the securing means are able to be controlled selectively in order to secure or release each half-mould (20) while the mould carriers are in the closed position, and **in that** the system comprises:
- assembling means designed to join together the half-moulds (20) so as to form a transportable unitary subassembly while the mould carriers are in the closed position, and
- a robot comprising at least one arm provided with gripping means that are able to seize the unitary subassembly and to transport said subassembly.

17. System according to Claim 16, **characterized in that** the gripping means constitute said assembling means, the gripping means performing the function of assembling and the function of supporting the transportable unitary subassembly.

18. System according to Claim 16, **characterized in that** the gripping means cooperate with a part (120) of the mould that projects out of the moulding apparatus (10).

19. System according to Claim 16, **characterized in that** the gripping means consist of a pincer comprising jaws that are able to grip said part (120) of the mould.

20. System according to Claim 16, **characterized in that** the gripping means consist of a pincer that is ordered to open and close.

21. System according to Claim 16, **characterized in that** the system comprises means for automatically carrying out a step that consists in removing the unitary subassembly from between the mould carriers, from its reference position, and a step consisting in installing a unitary subassembly in said reference position between the mould carriers in the open position.

22. System according to Claim 16, **characterized in that** the system comprises other gripping means which are standing by with a new moulding unitary subassembly in order to immediately carry out, after a removal phase, installation of said new moulding unitary subassembly on the moulding apparatus (10).
